# EUROPEAN PATENT APPLICATION

(11) **EP 4 304 214 A1**
(43) Date of publication of application: **10.01.2024**
(21) Application number: 22779029.2
(22) Date of filing: 30.03.2022
(51) Int. Cl.: H04W 4/06, H04W 72/00, H04W 72/04

(54) **COMMUNICATION METHOD AND APPARATUS**

(30) Priority: 01.04.2021 CN 202110356437
(71) Applicant: Huawei Technologies Co., Ltd., Shenzhen, Guangdong 518129 (CN)
(72) Inventor: XIANG, Hongyu, Shenzhen, Guangdong 518129 (CN); LI, Bingzhao, Shenzhen, Guangdong 518129 (CN); CHEN, Lei, Shenzhen, Guangdong 518129 (CN); CAO, Zhenzhen, Shenzhen, Guangdong 518129 (CN)
(74) Representative: Gill Jennings & Every LLP
(86) International application number: PCT/CN2022/084102
(87) International publication number: WO 2022/206847

(57) **Abstract**

A communication method and a communication apparatus are disclosed. In the method, a terminal device can obtain first resource information according to a preset rule or from a network device, where the first resource information includes at least one of frequency domain position information, a cyclic prefix, or a subcarrier spacing; and receive a multicast broadcast service in a radio access control RRC idle state or an RRC inactive state based on the first resource information. According to the method, a resource used when the terminal device receives the multicast broadcast service in the RRC idle state or the RRC inactive state can be determined, so that the terminal device can receive the multicast broadcast service in the RRC idle state or the RRC inactive state.

## Description

This application claims priority to Chinese Patent Application No. 202110356437.9, filed with the China National Intellectual Property Administration on April 1, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a wireless communication system is widely deployed to provide various types of communication, such as a voice service, a data service, or the like. The communication system includes one or more terminal devices connected to a core network device via an access network device, to implement communication between a plurality of communication devices. In some scenarios, for example, in a multicast scenario, the network device may send a multicast data packet to the plurality of terminal devices.

In a 5th generation terrestrial cellular wireless communication system, there are three types of working states of the terminal device: a radio resource control (radio resource control, RRC) connected state, an RRC idle state, and an RRC inactive state. Before performing multicast communication with the access network device, the terminal device needs to first establish a radio resource control (radio resource control, RRC) connection to the access network device, and then receive a multicast service through the RRC connection. Therefore, when the terminal device enters the RRC idle state or the RRC inactive state, how to receive the multicast service requires further study.

### SUMMARY

Embodiments of this application provide a communication method and apparatus, to enable a terminal device to perform a multicast broadcast service in an RRC idle state or an RRC inactive state.

According to a first aspect, a communication method is provided. The communication method is applied to a terminal device or may be applied to a chip inside the terminal device. In the method, a terminal device obtains first resource information, where the first resource information includes at least one of frequency domain position information, a cyclic prefix, or a subcarrier spacing; and the terminal device receives a multicast broadcast service in a radio access control RRC idle state or an RRC inactive state based on the first resource information.

In this way, the terminal device can obtain the first resource information, and receive the multicast broadcast service in the radio access control RRC idle state or the RRC inactive state based on the first resource information, so that the terminal device can receive the multicast broadcast service in the RRC idle state or the RRC inactive state.

In a possible implementation, a first resource indicated by the first resource information completely or partially overlaps a frequency domain resource corresponding to a first control resource set; or
a first resource indicated by the first resource information is a predefined resource; or
a first resource indicated by the first resource information is a resource used when the terminal device receives the multicast broadcast service in an RRC connected state.

In a possible implementation, the first control resource set is a control resource set (control-resource set, CORESET) (or referred to as CORESET0 or CORESET#0) numbered 0.

In a possible implementation, the method further includes: receiving an RRC connection release message from a network device, where the RRC connection release message does not carry the first resource information.

In this way, the terminal device can obtain the first resource information according to a preset rule. This not only determines a resource used when the terminal device receives the multicast broadcast service in the RRC idle state or the RRC inactive state, but also reduces signaling configuration overheads of the network device.

In a possible implementation, the obtaining first resource information includes:
receiving first indication information from a network device, where the first indication information indicates the terminal device to receive the multicast broadcast service in the radio access control RRC idle state or the RRC inactive state based on the first resource information; and
determining the first resource information based on the first indication information.

In a possible implementation, the first indication information carries the first resource information; or
the first resource information is resource information used when the terminal device receives the multicast broadcast service in an RRC connected state, and the first indication information indicates the terminal device to continue to use the resource information used when the terminal device receives the multicast broadcast service in the RRC connected state.

In a possible implementation, the first indication information is carried in a radio access control RRC message, a media access control control element (media access control control element, MAC CE), a common channel, or downlink control information (downlink control information, DCI), and the DCI is scrambled by using a radio network temporary identifier associated with the multicast broadcast service.

In a possible implementation, the radio network temporary identifier associated with the multicast broadcast service may be a cell radio network temporary identifier (cell radio network temporary identifier, C-RNTI), a group radio network temporary identifier (group radio network temporary identifier, G-RNTI), or a configured scheduling RNTI (configured scheduling RNTI, CS-RNTI).

In this way, the terminal device can receive the first indication information from the network device, and obtain the first resource information based on the first indication information, so that the terminal device can receive the multicast broadcast service in the RRC idle state or the RRC inactive state. In addition, the first indication information is indicated by the network device, so that adjustment and control of the network device is more flexible, to better match a transmission requirement of a service.

In a possible implementation, the method further includes the following operation:
sending second indication information to the network device, where the second indication information indicates that the terminal device has a capability to receive the multicast broadcast service in the RRC idle state or the RRC inactive state based on the first resource information, is used to request the network device to send the first resource information, indicates the first resource information requested by the terminal device, or indicates the terminal device to request RRC connection release.

In this way, the terminal device may send the second indication information to the network device to notify the network device of a requirement of the terminal device on the first resource information. Correspondingly, the network device may send the first resource information based on the second indication information sent by the terminal device. In this way, a manner of obtaining the first resource information by the terminal device is more flexible, and signaling overheads and resource waste caused by sending the first resource information by the network device to an unnecessary terminal device can be avoided.

In a possible implementation, the first resource information further includes at least one of the following: control resource set configuration information, physical downlink shared channel (physical downlink shared channel, PDSCH) configuration information, search space information, and semi-persistent scheduling (semi-persistent scheduling, SPS) configuration information.

In a possible implementation, the method further includes:
receiving third indication information from the network device, where the third indication information indicates update information of the first resource, indicates to stop using the first resource information, or indicates the terminal device to switch the first resource for receiving the multicast broadcast service to a second resource; and
performing one of the following operations based on the third indication information:
   updating the first resource information; stop using the first resource information; or switching the first resource for receiving the multicast broadcast service to the second resource.

In a possible implementation, any one or more of the first resource information, the first indication information, the second indication information, and the third indication information are associated with a first radio bearer.

In a possible implementation, the method further includes:
receiving fourth indication information, where the fourth indication information indicates the terminal device to delete a context of the multicast broadcast service, indicates the terminal device to continue to use a context of the multicast broadcast service, indicates the terminal device to enter a connected state to obtain a context of the multicast broadcast service, or indicates the terminal device to update context information of the multicast broadcast service; and
performing one of the following operations based on the fourth indication information:
   deleting the context of the multicast broadcast service; continuing to use the context of the multicast broadcast service; initiating a random access process; entering the connected state to obtain the context of the multicast broadcast service; and updating the context of the multicast broadcast service.

In a possible implementation, the fourth indication information may be carried in a radio access control RRC message, a media access control control element MAC CE, a common channel, downlink control information DCI, or a paging message.

In a possible implementation, the RRC message may be any one of the following messages: an RRC release message, an RRC setup message, an RRC resume message, or an RRC reconfiguration message.

In a possible implementation, the common channel includes a broadcast control channel (broadcast control channel, BCCH), a multicast control logical channel (multicast control channel, MCCH), and a multicast traffic logical channel (multicast traffic channel, MTCH).

In a possible implementation, the DCI may be scrambled by using an RNTI associated with the multicast broadcast service or scrambled by using a paging radio network temporary identifier (paging radio network temporary identifier, P-RNTI). Herein, in a possible implementation, the radio network temporary identifier associated with the multicast broadcast service may be a cell radio network temporary identifier (cell radio network temporary identifier, C-RNTI), a group radio network temporary identifier (group radio network temporary identifier, G-RNTI), or a configured scheduling RNTI (configured scheduling RNTI, CS-RNTI).

In a possible implementation, the terminal device may receive the fourth indication information in the RRC idle state, receive the fourth indication information in the RRC inactive state, receive the fourth indication information in a process of entering the RRC connected state, or receive the fourth indication information after entering the RRC connected state.

In this way, the terminal device can perform corresponding processing (for example, deleting or updating the context information of the multicast broadcast service) on the context information of the multicast broadcast service based on the fourth indication information, so that the terminal device can process the context information of the multicast broadcast service, save signaling overheads, and better receive the multicast broadcast service. In addition, the fourth indication information may be flexibly selected by the network device, thereby increasing flexibility of adjustment and control of the network device.

According to a second aspect, an embodiment of this application provides a communication method. The communication method is applied to a network device or may be applied to a chip inside the network device. In the method, the network device determines first resource information, where the first resource information includes at least one of frequency domain position information, a cyclic prefix, or a subcarrier spacing; and
sends a multicast broadcast service based on the first resource information, where the first resource information is used to receive the multicast broadcast service when a terminal device is in a radio access control RRC idle state or an RRC inactive state.

In a possible implementation, a first resource indicated by the first resource information completely or partially overlaps a frequency domain resource corresponding to a first control resource set; or
a first resource indicated by the first resource information is a predefined resource; or
a first resource indicated by the first resource information is a resource used when the terminal device receives the multicast broadcast service in an RRC connected state.

In a possible implementation, the first control resource set is a control resource set (control-resource set, CORESET) (or referred to as CORESET0 or CORESET#0) numbered 0.

In a possible implementation, the method further includes: sending an RRC connection release message to the terminal device, where the RRC connection release message does not carry the first resource information.

In a possible implementation, the method further includes:
sending first indication information to the terminal device, where the first indication information indicates the terminal device to receive the multicast broadcast service in the radio access control RRC idle state or the RRC inactive state based on the first resource information.

In a possible implementation, the first indication information carries the first resource information; or
the first resource information is resource information used when the terminal device receives the multicast broadcast service in an RRC connected state, and the first indication information indicates the terminal device to continue to use the resource information used when the terminal device receives the multicast broadcast service in the RRC connected state.

In a possible implementation, the first indication information is carried in a radio access control RRC message, a media access control control element (media access control control element, MAC CE), a common channel, or downlink control information (downlink control information, DCI), and the DCI is scrambled by using a radio network temporary identifier associated with the multicast broadcast service.

In a possible implementation, the radio network temporary identifier associated with the multicast broadcast service may be a cell radio network temporary identifier (cell radio network temporary identifier, C-RNTI), a group radio network temporary identifier (group radio network temporary identifier, G-RNTI), or a configured scheduling RNTI (configured scheduling RNTI, CS-RNTI).

In a possible implementation, the method further includes:
receiving second indication information from the terminal device, where the second indication information indicates that the terminal device has a capability to receive the multicast broadcast service in the RRC idle state or the RRC inactive state based on the first resource information, is used to request the first resource information, indicates the first resource information requested by the terminal device, or indicates the terminal device to request RRC connection release.

In a possible implementation, the first resource information further includes at least one of the following: control resource set configuration information, physical downlink shared channel (physical downlink shared channel, PDSCH) configuration information, search space information, and semi-persistent scheduling (semi-persistent scheduling, SPS) configuration information.

In a possible implementation, the method further includes:
sending third indication information to the terminal device, where the third indication information indicates update information of the first resource, indicates to stop using the first resource information, or indicates the terminal device to switch the first resource for receiving the multicast broadcast service to a second resource.

In a possible implementation, any one or more of the first resource information, the first indication information, the second indication information, and the third indication information are associated with a first radio bearer.

In a possible implementation, the method further includes the following operation:
sending fourth indication information, where the fourth indication information indicates the terminal device to delete a context of the multicast broadcast service, indicates the terminal device to continue to use a context of the multicast broadcast service, indicates the terminal device to enter a connected state to obtain a context of the multicast broadcast service, or indicates the terminal device to update context information of the multicast broadcast service.

In a possible implementation, the fourth indication information may be carried in a radio access control RRC message, a media access control control element MAC CE, a common channel, downlink control information DCI, or a paging message.

In a possible implementation, the RRC message may be any one of the following messages: an RRC release message, an RRC setup message, an RRC resume message, or an RRC reconfiguration message.

In a possible implementation, the common channel includes a broadcast control channel (broadcast control channel, BCCH), a multicast control logical channel (multicast control channel, MCCH), and a multicast traffic logical channel (multicast traffic channel, MTCH).

In a possible implementation, the DCI may be scrambled by using an RNTI associated with the multicast broadcast service or scrambled by using a paging radio network temporary identifier (paging radio network temporary identifier, P-RNTI). Herein, in a possible implementation, the radio network temporary identifier associated with the multicast broadcast service may be a cell radio network temporary identifier (cell radio network temporary identifier, C-RNTI), a group radio network temporary identifier (group radio network temporary identifier, G-RNTI), or a configured scheduling RNTI (configured scheduling RNTI, CS-RNTI).

For technical effect brought by some optional implementations of the second aspect, refer to the descriptions of the technical effect of the first aspect or the corresponding implementations of the first aspect.

According to a third aspect, a communication method is provided. The communication method is applied to a terminal device or may be applied to a chip inside the terminal device. In the method, the terminal device in an RRC idle state or an RRC inactive state receives fourth indication information, where the fourth indication information indicates the terminal device to delete a context of a multicast broadcast service, indicates the terminal device to continue to use a context of a multicast broadcast service, indicates the terminal device to enter a connected state to obtain a context of a multicast broadcast service, or indicates the terminal device to update context information of a multicast broadcast service. Then, the terminal device may process the context information of the multicast broadcast service based on the fourth indication information.

In this way, the terminal device can perform corresponding processing (for example, deleting or updating the context information of the multicast broadcast service) on the context information of the multicast broadcast service based on the fourth indication information, so that the terminal device can process the context information of the multicast broadcast service, save signaling overheads, and better receive the multicast broadcast service. In addition, the fourth indication information may be flexibly selected by a network device, thereby increasing flexibility of adjustment and control of the network device.

In a possible implementation, the fourth indication information indicates the terminal device to delete the context information of the multicast broadcast service. Correspondingly, the terminal device deletes the context of the multicast broadcast service based on the fourth indication information.

In a possible implementation, the fourth indication information indicates the terminal device to continue to use the context of the multicast broadcast service. Correspondingly, the terminal device continues to use the context of the old multicast broadcast service based on the fourth indication information.

In a possible implementation, the fourth indication information indicates the terminal device to enter an RRC connected state to obtain the context of the multicast broadcast service. Correspondingly, the terminal device may trigger a random access process to enter the RRC connected state to obtain the context of the multicast broadcast service.

In a possible implementation, the fourth indication information indicates the terminal device to update the context information of the multicast broadcast service. Correspondingly, the terminal device may update the context of the multicast broadcast service based on the fourth indication information.

In a possible implementation, the terminal device receives fourth indication information from a first network device, where the first network device is a network device that currently serves the terminal device.

In a possible implementation, the terminal device receives fourth indication information from a second network device, where the second network device is a network device that previously served the terminal device.

In this way, the terminal device may obtain the fourth indication information from the first network device, and may also obtain the fourth indication information from the second network device. This enriches a manner of obtaining the fourth indication information.

In a possible implementation, the fourth indication information may be carried in a radio access control RRC message, a media access control control element MAC CE, a common channel, downlink control information DCI, or a paging message.

In a possible implementation, the RRC message may be any one of the following messages: an RRC release message, an RRC setup message, an RRC resume message, or an RRC reconfiguration message.

In a possible implementation, the common channel includes a broadcast control channel (broadcast control channel, BCCH), a multicast control logical channel (multicast control channel, MCCH), and a multicast traffic logical channel (multicast traffic channel, MTCH).

In a possible implementation, the DCI may be scrambled by using an RNTI associated with the multicast broadcast service or scrambled by using a paging radio network temporary identifier (paging radio network temporary identifier, P-RNTI). Herein, in a possible implementation, the radio network temporary identifier associated with the multicast broadcast service may be a cell radio network temporary identifier (cell radio network temporary identifier, C-RNTI), a group radio network temporary identifier (group radio network temporary identifier, G-RNTI), or a configured scheduling RNTI (configured scheduling RNTI, CS-RNTI).

In a possible implementation, the terminal device may receive the fourth indication information in the RRC idle state, receive the fourth indication information in the RRC inactive state, receive the fourth indication information in a process of entering the RRC connected state, or receive the fourth indication information after entering the RRC connected state.

In this way, the terminal device may obtain the fourth indication information in the RRC idle state or the RRC inactive state, and may also obtain the fourth indication information in the RRC connected state. This enriches a manner of obtaining the fourth indication information.

According to a fourth aspect, a communication method is provided. The communication method is applied to a first network device or may be applied to a chip inside the first network device. In the method, the first network device obtains fourth indication information, where the fourth indication information indicates a terminal device to delete a context of a multicast broadcast service, indicates the terminal device to continue to use a context of a multicast broadcast service, indicates the terminal device to enter a connected state to obtain a context of a multicast broadcast service, or indicates the terminal device to update context information of a multicast broadcast service.

In a possible implementation, the first network device may obtain the fourth indication information from the first network device, obtain the fourth indication information from a core network device, or obtain the fourth indication information from another network device.

In a possible implementation, the fourth indication information may be carried in a radio access control RRC message, a media access control control element MAC CE, a common channel, downlink control information DCI, or a paging message.

In a possible implementation, the RRC message may be any one of the following messages: an RRC release message, an RRC setup message, an RRC resume message, or an RRC reconfiguration message.

In a possible implementation, the common channel includes a broadcast control channel (broadcast control channel, BCCH), a multicast control logical channel (multicast control channel, MCCH), and a multicast traffic logical channel (multicast traffic channel, MTCH).

In a possible implementation, the DCI may be scrambled by using an RNTI associated with the multicast broadcast service or scrambled by using a paging radio network temporary identifier (paging radio network temporary identifier, P-RNTI). Herein, in a possible implementation, the radio network temporary identifier associated with the multicast broadcast service may be a cell radio network temporary identifier (cell radio network temporary identifier, C-RNTI), a group radio network temporary identifier (group radio network temporary identifier, G-RNTI), or a configured scheduling RNTI (configured scheduling RNTI, CS-RNTI).

In a possible implementation, the method further includes:
receiving, from a second network device, a request message for obtaining the context; and
in response to the request message for obtaining the context, sending, to the second network device, a response message for obtaining the context, where the response message includes fifth indication information, and the fifth indication information indicates that the multicast broadcast service stops, indicates that the multicast broadcast service is no longer sent, indicates that the context of the multicast broadcast service is deleted, indicates that the context of the multicast broadcast service is removed, or indicates that the context of the multicast broadcast service is released.

In a possible implementation, the method further includes:
sending a stop indication to the second network device, where the stop indication indicates the second network device to stop the multicast broadcast service, or indicates the second network device to no longer provide the multicast broadcast service.

In a possible implementation, the method further includes:
receiving, from the second network device, the request message for obtaining the context; and
in response to the request message for obtaining the context, sending, to the second network device, the response message for obtaining the context, where the response message includes the context information of the multicast broadcast service, and the context information may include a context of all or a part of the multicast broadcast service.

For technical effect brought by some optional implementations of the fourth aspect, refer to the descriptions of the technical effect of the third aspect or the corresponding implementations of the third aspect.

According to a fifth aspect, a communication method is provided. The communication method is applied to a second network device or may be applied to a chip inside the second network device. In the method, the second network device obtains fourth indication information, where the fourth indication information indicates a terminal device to delete a context of a multicast broadcast service, indicates the terminal device to continue to use a context of a multicast broadcast service, indicates the terminal device to enter a connected state to obtain a context of a multicast broadcast service, or indicates the terminal device to update context information of a multicast broadcast service.

In a possible implementation, the second network device may obtain the fourth indication information from the second network device, obtain the fourth indication information from a core network device, or obtain the fourth indication information from a first network device.

In a possible implementation, the fourth indication information may be carried in a radio access control RRC message, a media access control control element MAC CE, a common channel, downlink control information DCI, or a paging message.

In a possible implementation, the RRC message may be any one of the following messages: an RRC release message, an RRC setup message, an RRC resume message, or an RRC reconfiguration message.

In a possible implementation, the common channel includes a broadcast control channel (broadcast control channel, BCCH), a multicast control logical channel (multicast control channel, MCCH), and a multicast traffic logical channel (multicast traffic channel, MTCH).

In a possible implementation, the DCI may be scrambled by using an RNTI associated with the multicast broadcast service or scrambled by using a paging radio network temporary identifier (paging radio network temporary identifier, P-RNTI). Herein, in a possible implementation, the radio network temporary identifier associated with the multicast broadcast service may be a cell radio network temporary identifier (cell radio network temporary identifier, C-RNTI), a group radio network temporary identifier (group radio network temporary identifier, G-RNTI), or a configured scheduling RNTI (configured scheduling RNTI, CS-RNTI).

In a possible implementation, the method further includes:
sending, to the first network device, a request message for obtaining the context; and
receiving a response message that is for obtaining the context and that is sent by the first network device, where the response message includes fifth indication information, and the fifth indication information indicates that the multicast broadcast service stops, indicates that the multicast broadcast service is no longer sent, indicates that the context of the multicast broadcast service is deleted, indicates that the context of the multicast broadcast service is removed, or indicates that the context of the multicast broadcast service is released.

In a possible implementation, the method further includes:
receiving a stop indication from the first network device, where the stop indication indicates the second network device to stop the multicast broadcast service, or indicates the second network device to no longer provide the multicast broadcast service.

In a possible implementation, the method further includes:
sending, to the first network device, the request message for obtaining the context; and
receiving, from the first network device, the response message for obtaining the context, where the response message includes the context information of the multicast broadcast service, and the context information may include a context of all or a part of the multicast broadcast service.

For technical effect brought by some optional implementations of the fifth aspect, refer to the descriptions of the technical effect of the fifth aspect or the corresponding implementations of the fifth aspect.

According to a sixth aspect, a communication apparatus is provided, including each module or unit configured to perform the method according to any one of the foregoing aspects or the possible implementations of the aspect.

According to a seventh aspect, a communication apparatus is provided, and includes a processor. The processor is coupled to a memory, and may be configured to execute instructions in the memory, to enable the apparatus to perform the method according to any one of the foregoing aspects or the possible implementations of the aspect. Optionally, the apparatus further includes the memory. Optionally, the apparatus further includes an interface circuit, and the processor is coupled to the interface circuit.

According to an eighth aspect, a processor is provided, including an input circuit, an output circuit, and a processing circuit. The processing circuit is configured to: receive a signal through the input circuit, and transmit a signal through the output circuit, to enable the processor to perform the method according to any one of the foregoing aspects or the possible implementations of the aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to a ninth aspect, a communication apparatus is provided, including a processor and a memory. The processor is configured to: read instructions stored in the memory, receive a signal by using a receiver, and transmit a signal by using a transmitter, to perform the method according to any one of the foregoing aspects or the possible implementations of the aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

The processor according to the ninth aspect may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory. The memory may be integrated into the processor, or may be located outside the processor, and exists independently.

According to a tenth aspect, a computer program product is provided. The computer program product includes a computer program (which may alternatively be referred to as code or instructions). When the computer program is run, a computer is enabled to perform the method according to any one of the foregoing aspects or the possible implementations of the aspect.

According to an eleventh aspect, a computer-readable medium is provided. The computer-readable medium stores a computer program (which may alternatively be referred to as code or instructions). When the computer program is run on a computer, the computer is enabled to perform the method according to any one of the foregoing aspects or the possible implementations of the aspect.

### BRIEF DESCRIPTION OF DRAWINGS

FIG. 1 is a schematic diagram of a network architecture to which an embodiment of this application is applicable;
FIG. 2 is a schematic diagram of another network architecture to which an embodiment of this application is applicable;
FIG. 3 is a schematic diagram of yet another network architecture to which an embodiment of this application is applicable;
FIG. 4a is a schematic diagram of a carrier bandwidth according to an embodiment of this application;
FIG. 4b is a schematic diagram of a BWP configuration in a carrier bandwidth according to an embodiment of this application;
FIG. 4c is a schematic diagram of another BWP configuration in a carrier bandwidth according to an embodiment of this application;
FIG. 4d is a schematic diagram of yet another BWP configuration in a carrier bandwidth according to an embodiment of this application;
FIG. 5a is a schematic diagram of configuration of a unicast BWP and a CFR according to an embodiment of this application;
FIG. 5b is a schematic diagram of configuration of another unicast BWP and a CFR according to an embodiment of this application;
FIG. 5c is a schematic diagram of configuration of yet another unicast BWP and a CFR according to an embodiment of this application;
FIG. 5d is a schematic diagram of configuration of an initial BWP and a CFR according to an embodiment of this application;
FIG. 5e is a schematic diagram of configuration of another initial BWP and a CFR according to an embodiment of this application;
FIG. 5f is a schematic diagram of configuration of yet another initial BWP and a CFR according to an embodiment of this application;
FIG. 5g is a schematic diagram of configuration of a configured BWP and a CFR according to an embodiment of this application;
FIG. 6 is a schematic flowchart of obtaining a UE context according to an embodiment of this application;
FIG. 7 is a schematic flowchart of a communication method according to an embodiment of this application;
FIG. 8 is a flowchart of a communication method according to an embodiment of this application;
FIG. 9 is another flowchart of a communication method according to an embodiment of this application;
FIG. 10 is yet another flowchart of a communication method according to an embodiment of this application;
FIG. 11 is a schematic flowchart of a communication method according to an embodiment of this application;
FIG. 12 is a flowchart of a communication method according to an embodiment of this application;
FIG. 13 is another flowchart of a communication method according to an embodiment of this application;
FIG. 14 is yet another flowchart of a communication method according to an embodiment of this application;
FIG. 15 is a schematic block diagram of a communication apparatus according to an embodiment of this application;
FIG. 16 is a schematic block diagram of a terminal device according to an embodiment of this application; and
FIG. 17 is a schematic block diagram of a network device according to an embodiment of this application.

### DESCRIPTION OF EMBODIMENTS

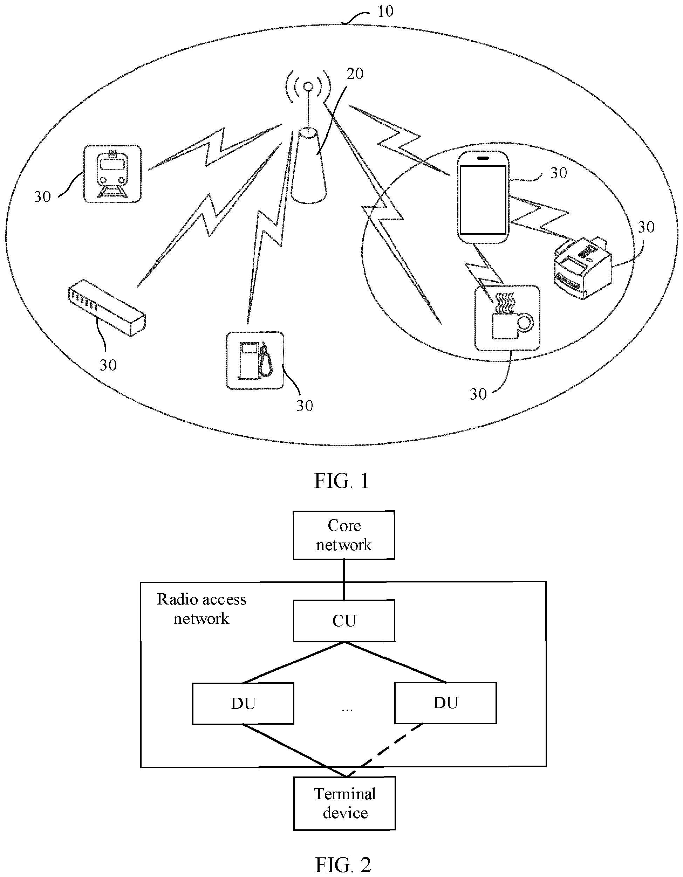

A technology provided in embodiments of this application may be applied to a communication system 10 shown in FIG. 1. The communication system 10 includes one or more communication apparatuses 30 (for example, terminal devices) connected to one or more core network devices via one or more access network devices 20, to implement communication between a plurality of communication devices. The communication system may be, for example, a communication system that supports a 2G, 3G, 4G, or 5G (sometimes also referred to as a new radio, NR) access technology, a wireless fidelity (wireless fidelity, Wi-Fi) system, or a 3rd generation partnership project (3rd generation partnership project, 3GPP) related cellular system, a communication system that supports convergence of a plurality of wireless technologies, or a future-oriented evolved system.

The following describes some terms in embodiments of this application, to facilitate understanding of a person skilled in the art.

In this application, the terminal device is a device with a wireless transceiver function, and may be a fixed device, a mobile device, a handheld device (for example, a mobile phone), a wearable device, a vehicle-mounted device, or a wireless apparatus (for example, a communication module, a modem, a chip system, or the like) built in the device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, a smart wearable, smart transportation, a smart city (smart city), an unmanned aerial vehicle, and a robot. The terminal device may sometimes be referred to as user equipment (user equipment, UE), a terminal, an access station, a UE station, a remote station, a wireless communication device, a user apparatus, or the like. For ease of description, the UE is used as an example for description of the terminal device in this application.

A network device in this application includes, for example, an access network (radio access network, RAN) device and/or a core network (core network, CN) device. The access network device is a device having a wireless transceiver function, and is configured to communicate with the terminal device. The access network device includes but is not limited to a base station (BTS, NodeB, eNodeB/eNB, or gNodeB/gNB) in the communication system, a transmission reception point (transmission reception point, TRP), a base station that is subsequently evolved from 3GPP, and an access node, a wireless relay node, a wireless backhaul node, and the like in the Wi-Fi system. The base station may be a macro base station, a micro base station, a picocell base station, a small cell, a relay station, or the like. A plurality of base stations may support networks using a same access technology mentioned above, or may support networks using different access technologies mentioned above. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in the V2X technology may be a road side unit (road side unit, RSU). The following uses an example in which the access network device is the base station for description. A plurality of network devices in the communication system may be base stations of a same type, or may be base stations of different types. The base station may communicate with the terminal device, or may communicate with the terminal device through the relay station. The terminal device may communicate with a plurality of base stations in different access technologies. The core network device is configured to implement functions such as mobility management, data processing, session management, and policy and charging. Names of devices that implement the core network functions in systems of different access technologies may be different. This is not limited in this application. The 5G system is used as an example. The core network device includes an access and mobility management function (access and mobility management function, AMF), a session management function (session management function, SMF), a user plane function (user plane function, UPF), or the like.

In embodiments of this application, an apparatus configured to implement a network device function may be the network device, or may be an apparatus, for example, a chip system, that can support the network device in implementing the function. The apparatus may be installed in the network device. In technical solutions provided in embodiments of this application, the technical solutions provided in embodiments of this application are described by using an example in which the apparatus configured to implement the function of the network device is the network device.

In embodiments of this application, unless otherwise specified, a quantity of nouns indicates "a singular noun or a plural noun", namely, "one or more". "At least one" means one or more, and "a plurality of" means two or more. Aterm "and/or" describes an association relationship between associated objects and indicates that three relationships may exist. For example, A and/or B may indicate the following three cases: Only A exists, both A and B exist, and only B exists, where A and B may be singular or plural. A character "/" usually indicates an "or" relationship between the associated objects. For example, A/B indicates A or B. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c. Herein, a, b, and c may be singular or plural.

Ordinal numerals such as "first" and "second" in embodiments of this application are used to distinguish between a plurality of objects, and are not intended to limit sizes, content, an order, a time sequence, priorities, or importance degrees of the plurality of objects. For example, first resource information and second resource information may be same resource information, or may be different resource information. In addition, the names do not indicate different information amounts, content, priorities, or importance degrees of the two pieces of resource information.

FIG. 2 shows another communication network architecture in a communication system 10 according to this application. As shown in FIG. 2, the communication system includes a core network (core network, CN) and a radio access network (radio access network, RAN). A network device (for example, a base station) in the RAN includes a baseband apparatus and a radio frequency apparatus. The baseband apparatus may be implemented by one or more nodes, and the radio frequency apparatus may be independently implemented remotely from the baseband apparatus, may be integrated into the baseband apparatus, or a part of the radio frequency apparatus is implemented remotely from the baseband apparatus and a remaining part is integrated into the baseband apparatus. The network device in the RAN may include a central unit (CU) and a distributed unit (DU), and a plurality of DUs may be controlled by one CU in a centralized manner. The CU and the DU may be divided based on protocol layer functions of a wireless network. For example, functions of a PDCP layer and a protocol layer above the PDCP layer are set on the CU, and functions of a protocol layer below the PDCP layer, such as an RLC layer and a MAC layer, are set on the DU. It should be noted that the protocol layer division is merely an example, and there may be division of another protocol layer. The radio frequency apparatus may not be disposed in the DU but is disposed remotely from the DU, may be integrated into the DU, or a part of the radio frequency apparatus is disposed remotely from the DU and a remaining part is integrated into the DU. This is not limited in this application.

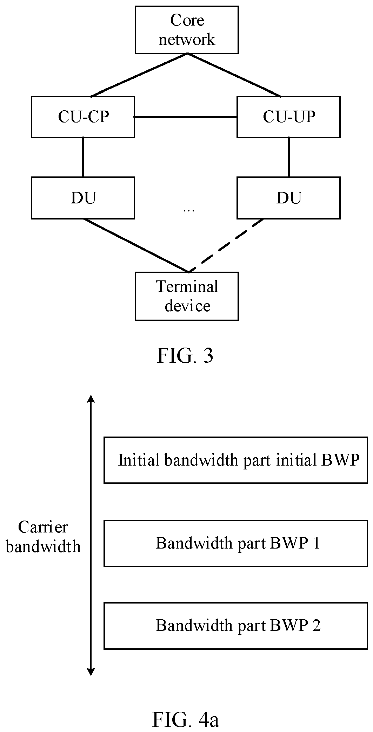

FIG. 3 shows another communication network architecture in a communication system 10 according to this application. Compared with the architecture shown in FIG. 2, a control plane (CP) and a user plane (UP) of a CU may be separated and implemented by using different entities. The different entities are respectively a control plane CU entity (CU-CP entity) and a user plane CU entity (CU-UP entity). In the network architecture, signaling generated by the CU may be sent to UE via a DU, or signaling generated by the UE may be sent to the CU via the DU. The DU may transparently transmit the signaling to the UE or the CU by directly encapsulating the signaling at a protocol layer without parsing the signaling. In the network architecture, the CU is classified as a network device on a RAN side. In addition, the CU may be classified as a network device on a CN side. This is not limited in this application.

In embodiments of this application, "if" may also be replaced with "when...", "when a condition of...is satisfied", or "in a case in which...". This is not distinguished in this application, and alternative use is allowed in the following description.

In embodiments of this application, "located" may also be replaced with "occupied" or "located". This is not distinguished in this application, and alternative use is allowed in the following description.

In embodiments of this application, "delete" may also be replaced with "remove", "remove", or "release". This is not distinguished in this application, and alternative use is allowed in the following description.

In embodiments of this application, "retain" may also be replaced with "save" or "not release". This is not distinguished in this application, and alternative use is allowed in the following description.

In embodiments of this application, a multicast broadcast service MBS (multicast broadcast service) includes a broadcast service and/or a multicast service. In other words, the "multicast broadcast service" in this specification may be replaced with the "broadcast service", the "multicast service", the "broadcast service and the multicast service", or another name. The name is not limited in this application.

The following describes related technical features in embodiments of this application.

### 1. RRC state

A terminal device has three RRC states: an RRC connected state (connected state), an RRC idle state (idle state), and an inactive state (inactive state).
(1) RRC connected state (referred to as a connected state for short, where the "connected state" and the "RRC connected state" are interchangeable in this specification): The terminal device can perform data transmission after establishing an RRC connection to a network.
(2) RRC idle state (referred to as an idle state for short, where the "idle state" and the "RRC idle state" are interchangeable in this specification): In this state, the terminal device does not establish the RRC connection to the network, and a base station does not store a context of the terminal device. If the terminal device needs to transit from the RRC idle state to the RRC connected state, the terminal device needs to initiate an RRC connection setup process first.
(3) RRC inactive state (referred to as an inactive state for short, where an "inactivated state", a "deactivated state", the "inactive state", the "RRC inactive state", and an "RRC deactivated state" are interchangeable in this specification): The terminal device previously entered the RRC connected state, and then the base station released the RRC connection but the base station stored the context of the terminal device. If the terminal device needs to transit from the RRC inactive state to the RRC connected state again, the terminal device needs to initiate an RRC resume process (or referred to as an RRC connection resume process). Compared with the RRC setup process, the RRC resume process has a shorter delay and lower signaling overheads. However, the base station needs to store the context of the terminal device, resulting in storage overheads of the base station.

### 2. BWP

In a 5G communication system, to adapt to a bandwidth capability of the terminal device, a BWP may be configured for the terminal device within a bandwidth (which may be referred to as a carrier bandwidth, with a specific value of 10 MHz, 15 MHz, 20 MHz, 50 MHz, 100 MHz, 400 MHz, or the like) supported by one carrier. A plurality of BWPs may be configured in one carrier. For example, four BWPs may be configured for one carrier. The BWP may be referred to as a bandwidth part (bandwidth part, BWP) or another name. The name is not limited in this application. For ease of description, the following uses the BWP as an example for description.

### (1) BWP classification

For example, there are two types of BWP roughly: (1) an initial BWP (Initial BWP), which is a BWP used by the terminal device in an initial access phase; (2) a dedicated BWP (Dedicated BWP), which is a BWP configured by a network device for the terminal device after the terminal device enters the connected state. As shown in FIG. 4a, the BWP is a bandwidth part of a cell, and main parameters of the BWP include a bandwidth, a frequency position, a subcarrier spacing (subcarrier spacing, SCS), a cyclic prefix (cyclic prefix, CP), a control resource set (control resource set, CORESET), and PDSCH-related configuration information. A cell has at least one initial BWP, and all common information such as a broadcast, paging, and the like is sent on the initial BWP. After the terminal device enters the connected state, the network device may configure some dedicated BWPs for the terminal device. Specifically, the network device may configure a maximum of four dedicated BWPs and identifiers of the dedicated BWPs by using an RRC message. At one moment, the terminal device can have only one dedicated BWP in an active state, that is, the terminal device can use only one BWP. A first active BWP (First Active BWP) may be indicated by using RRC signaling. Further, the network device may configure a default BWP (default BWP) for the terminal device by using an RRC reconfiguration (Reconfiguration) message, and the default BWP may be one of the dedicated BWPs. If the network device configures no default BWP, the terminal device may consider the initial BWP as the default BWP.

### (2) BWP configuration

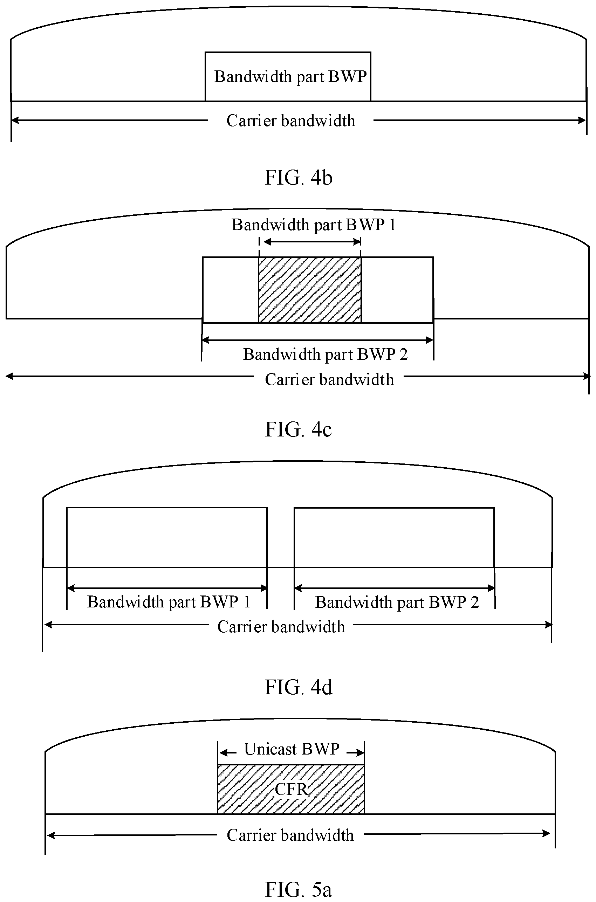

FIG. 4b to FIG. 4d show three BWP configurations in a carrier bandwidth according to an embodiment of this application. FIG. 4b shows a case in which one BWP is configured in the carrier bandwidth. The network device may first allocate a BWP within a terminal bandwidth capability range to the terminal device, and certainly may further allocate some or all resources in the BWP to the terminal device for communication. The network device may configure different BWPs for the terminal device based on actual scenarios. For example, to reduce power consumption of the terminal device, the network device may allocate the BWP to the terminal device based on a traffic volume of the terminal device. When the terminal device does not transmit service data or transmits only a small amount of service data, a small BWP, such as a BWP 1 shown in FIG. 4c, may be allocated to the terminal device to receive control information and a small amount of data information. When the terminal device needs to transmit a large amount of service data, a large BWP, such as a BWP 2 shown in FIG. 4c, may be allocated to the terminal device. For another example, in the 5G communication system, a plurality of service types and communication scenarios may be supported, and different parameters may be configured for the different service types and communication scenarios. The network device may allocate corresponding BWPs to the terminal device based on different service types of the terminal device. As shown in FIG. 4d, one BWP may correspond to one service type, and to meet a service requirement of the service type, an SCS that can meet the service requirement may be configured for the BWP. It can be learned from FIG. 4c that different BWPs may occupy partially overlapping frequency domain resources. It can be learned from FIG. 4d that different BWPs may alternatively occupy totally different frequency domain resources and use different SCSs. In embodiments of this application, the SCSs corresponding to the different BWPs may be the same or may be different. This is not limited in this application. It may be understood that, in FIG. 4b to FIG. 4d, only an example in which one BWP or two BWPs are configured in one carrier is used for description. In actual application, a plurality of BWPs may be configured in the carrier. This is not limited in embodiments of this application.

### 3. Multicast frequency domain resource

The multicast frequency domain resource may be used to transmit a multicast broadcast service. For example, the multicast frequency domain resource may be a frequency domain resource shared by a plurality of terminal devices, so that the plurality of terminal devices can receive, on the multicast frequency domain resource, the multicast broadcast service sent by the network device. The multicast frequency domain resource may alternatively be referred to as a common frequency resource (common frequency resource, CFR), a multicast BWP or may be another name. This is not limited in embodiments of this application. For ease of description, the following uses the CFR as an example for description.
(1) The terminal device in the RRC connected state may need to simultaneously receive a unicast service and a multicast broadcast service. The multicast broadcast service includes a multicast service and/or a broadcast service. For multicast broadcast service reception, a CFR used to receive information related to the multicast broadcast service may be defined. Herein, the information related to the multicast broadcast service includes a physical downlink control channel (physical downlink control channel, PDCCH) and/or a physical downlink shared channel (physical downlink shared channel, PDSCH).

The CFR used in the RRC connected state is related to a BWP (a unicast BWP for short) used for receiving the unicast service. The CFR may use a physical resource parameter that is the same as or different from that of the unicast BWP. The physical resource parameter includes a subcarrier spacing (subcarrier spacing, SCS) and/or a cyclic prefix (cyclic prefix, CP). Compared with the unicast BWP, the CFR may be an additionally configured frequency band resource, or may be all or some frequency band resources intercepted in the unicast BWP. It should be noted that the following uses an example in which only one CFR is configured for description. In actual application, a plurality of CFRs may be configured. This is not limited in embodiments of this application.

Case a1: As shown in FIG. 5a, a frequency resource of a CFR is the same as a frequency resource of a unicast BWP. It may be understood that, in this case, the frequency resource of the CFR and the frequency resource of the unicast BWP completely overlap (or completely coincide) in frequency domain.

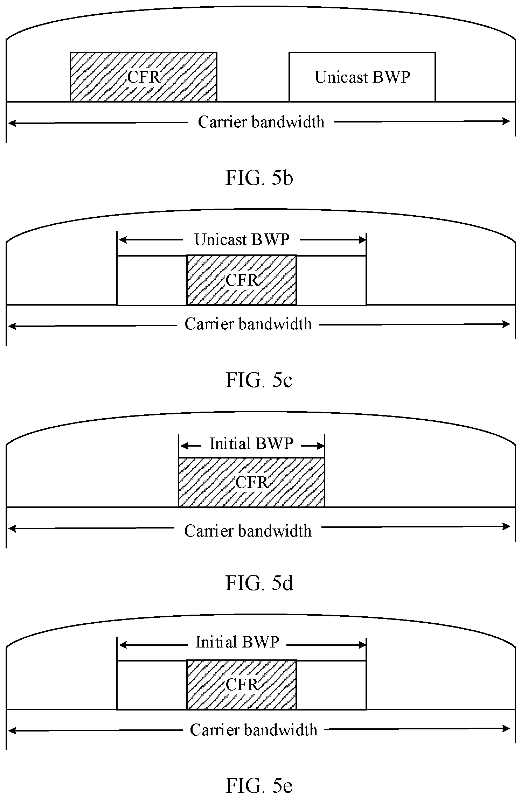

Case a2: As shown in FIG. 5b, a frequency resource of a CFR is different from a unicast BWP. The difference herein means that the frequency resource of the CFR does not overlap a frequency resource of the unicast BWP. It may be understood that the frequency resource of the CFR may alternatively partially overlap the frequency resource of the unicast BWP.

Case a3: As shown in FIG. 5c, a CFR may be a part of continuous frequency resources in a unicast BWP, or the CFR may be a multicast broadcast service frequency region (multicast broadcast service frequency region, MBS frequency region) that occupies several continuous physical resource blocks (physical resource blocks, PRBs) in frequency domain, where the region is within a frequency range of the unicast BWP.

(2) The terminal device in the RRC idle state or the RRC inactive state may need to receive the broadcast service. For broadcast service reception, a CFR for the broadcast service reception may also be defined. The CFR may use a physical resource parameter that is the same as or different from that of an initial BWP. The physical resource parameter includes a subcarrier spacing (subcarrier spacing, SCS) and/or a cyclic prefix (cyclic prefix, CP). Compared with the initial BWP, the CFR may be an additionally configured frequency band resource, or may be all or some frequency band resources intercepted in the initial BWP. Alternatively, the frequency resource of the CFR covers a frequency resource of the initial BWP. It should be noted that the following uses an example in which only one CFR is configured for description. In actual application, a plurality of CFRs may be configured. This is not limited in embodiments of this application.

Case b 1: As shown in FIG. 5d, a frequency resource of a CFR is the same as a frequency resource of an initial BWP. It may be understood that, in this case, the frequency resource of the CFR and the frequency resource of the initial BWP completely overlap (or completely coincide) in frequency domain.

Case b2: As shown in FIG. 5e, a frequency resource of a CFR falls within a frequency range of an initial BWP. It may be understood that, in this case, the frequency resource of the CFR and a frequency resource of the initial BWP partially overlap (or partially coincide) in frequency domain, and the frequency resource of the CFR is less than the frequency resource of the initial BWP.

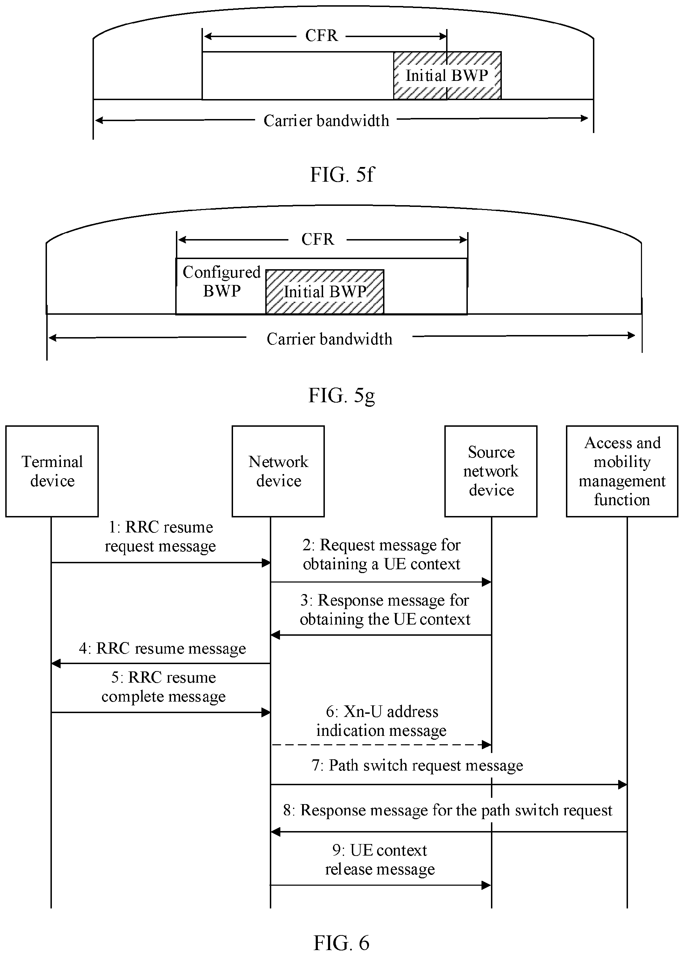

Case b3: As shown in FIG. 5f, a frequency range of an initial BWP falls within a frequency domain range of a CFR. It may be understood that, in this case, a frequency domain resource of the CFR and a frequency domain resource of the initial BWP partially overlap (or partially coincide) in frequency domain, and the frequency domain resource of the CFR is greater than the frequency domain resource of the initial BWP.

Case b4: As shown in FIG. 5g, a frequency resource of a CFR is the same as a frequency resource of a configured BWP. It may be understood that, in this case, the frequency resource of the CFR and the frequency resource of the configured BWP completely overlap (or completely coincide) in frequency domain, and a frequency range of an initial BWP falls within a frequency domain range of the configured BWP. It may be understood that, in this case, a frequency domain resource of the configured BWP completely includes a frequency domain resource of the initial BWP.

It should be noted that the frequency domain resource of the initial BWP may be configured by using a broadcast message. Alternatively, the frequency domain resource of the initial BWP is equal to a frequency domain resource corresponding to CORESET0.

### 4. UE context obtaining process

After receiving a paging message, the terminal device in the RRC idle state or the RRC inactive state needs to resume the RRC connection to the network device through a random access process. After the terminal device sends an RRC resume request message to a serving network device, the serving network device may obtain the UE context from a source network device. If the terminal device needs to re-enter the RRC inactive state, the serving network device may send an RRC release message to the terminal device. FIG. 6 is a schematic flowchart in which a terminal device in an RRC inactive state obtains a context according to an embodiment of this application, and the following steps are included.
Step 1: A terminal device sends an RRC resume request message to a serving network device (gNB), where the request message includes a UE identifier, and the UE identifier may be used to obtain a UE context.
Step 2: The serving network device sends, to a source network device (or referred to as a network device that provided a service last time), a request message for obtaining the UE context.
Step 3: The source network device sends, to the serving network device, a response message for obtaining the UE context.
Step 4: The serving network device sends an RRC resume message to the terminal device.
Step 5: The terminal device sends an RRC resume complete message to the serving network device.
Step 6: Optionally, the serving network device sends an Xn-U address indication message to the source network device. Xn-U is a user plane interface between 5G base stations, and is mainly responsible for user plane transmission, for example, data forwarding and traffic control.
Step 7: The source network device sends a path switch request message to an access and mobility management function (access and mobility management function, AMF) device.
Step 8: The AMF sends a response message for the path switch request to the source network device.
Step 9: The serving network device sends a UE context release message to the source network device.

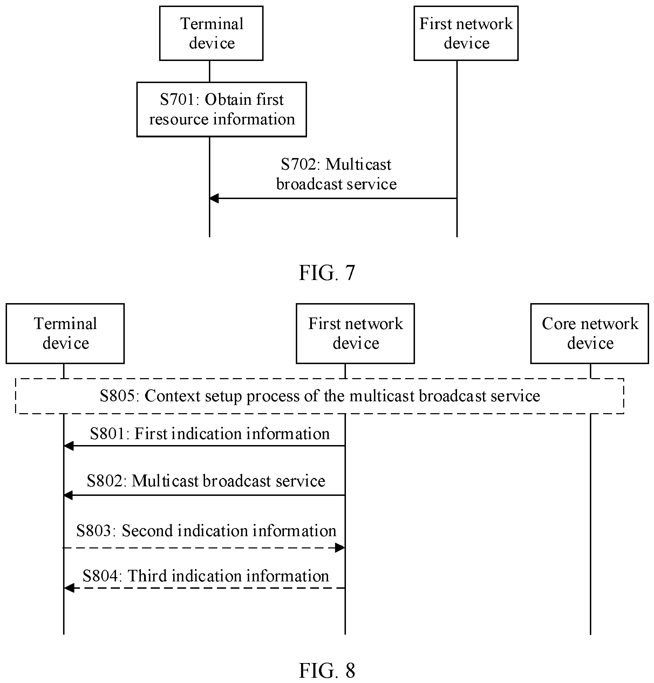

The following describes in detail a communication method in this application with reference to FIG. 7. It should be understood that, FIG. 7 shows detailed communication steps or operations of the method, but these steps or operations are merely examples. In embodiments of this application, another operation or variations of the various steps in FIG. 7 may be further performed. In addition, the steps in FIG. 7 may be performed in an order different from that presented in FIG. 7, and the operations in FIG. 7 may not necessarily be all performed.

Refer to FIG. 7. An embodiment of a communication method according to this application includes the following steps.

S701: A terminal device obtains first resource information.

The first resource information is used to transmit a multicast broadcast service. The first resource information may alternatively be referred to as a multicast frequency domain resource. For a definition and description of the multicast frequency domain resource, refer to the foregoing descriptions. Details are not described herein again. The first resource information includes at least one of frequency domain position information, a cyclic prefix, or a subcarrier spacing.

The terminal device obtains the first resource information in a plurality of manners. For example, the terminal device may obtain the first resource information by default (for example, according to a protocol specification or a preset rule) or by receiving first indication information (explicitly or implicitly) sent by a first network device. The following uses a manner a and a manner b for description.

Manner a: The terminal device receives the first indication information from the first network device, and correspondingly, the first network device sends the first indication information to the terminal device.

The first indication information indicates the terminal device to receive the multicast broadcast service in an RRC idle state or an RRC inactive state based on the first resource information.

Optionally, the first indication information carries the first resource information. In this case, when the terminal device is in the RRC idle state or the RRC inactive state, the terminal device may receive the multicast broadcast service based on the first resource information carried in the first indication information.

Optionally, the first indication information indicates the terminal device to continue to use resource information used when the terminal device receives the multicast broadcast service in an RRC connected state. In this case, the first resource information is a resource used when the terminal device receives the multicast broadcast service in the RRC connected state. Correspondingly, when the terminal device is in the RRC idle state or the RRC inactive state, the terminal device may continue to receive the corresponding multicast broadcast service by using the resource used when receiving the multicast broadcast service in the RRC connected state.

Optionally, the first indication information may be carried in a radio access control RRC message, a media access control control element MAC CE, a common channel, downlink control information DCI, or a broadcast message, and sent to the terminal device.

Further, the RRC message may be any one of the following messages: an RRC connection release message or an RRC release message.

Further, the common channel includes a broadcast control channel (broadcast control channel, BCCH), a multicast control logical channel (multicast control channel, MCCH), and a multicast traffic logical channel (multicast traffic channel, MTCH).

Further, the first network device may scramble the first indication information by using a cell radio network temporary identifier (radio network temporary identifier, RNTI). Correspondingly, the terminal device may descramble the first indication information by using the RNTI. Herein, the RNTI is associated with the multicast broadcast service. Optionally, the RNTI includes a cell radio network temporary identifier (cell radio network temporary identifier, C-RNTI) and/or a common RNTI. Specifically, the common RNTI may be a group radio network temporary identifier (group radio network temporary identifier, G-RNTI), system information RNTI (system information RNTI, SI-RNTI), a multicast control channel RNTI (multicast control channel RNTI, MCCH-RNTI), or a paging P-RNTI (Paging RNTI).

Optionally, there are a plurality of possible implementations as for time when the terminal device obtains the first indication information. For example, the terminal device may obtain the first indication information in the RRC connected state, obtain the first indication information in a process of entering the RRC idle state, obtain the first indication information in a process of entering the RRC inactive state, obtain the first indication information in the RRC idle state, or obtain the first indication information in the RRC inactive state.

Manner b: The terminal device may obtain the first resource information according to the preset rule.

For example, the terminal device obtains the first resource information, where a first resource indicated by the first resource information completely or partially overlaps a frequency domain resource corresponding to a first control resource set, a first resource indicated by the first resource information is a predefined resource, a first resource indicated by the first resource information is a resource used when the terminal device receives the multicast broadcast service in the RRC connected state.

S702: The terminal device receives the multicast broadcast service in the RRC idle state or the RRC inactive state based on the first resource information.

Optionally, the terminal device receives the multicast broadcast service in the RRC idle state or the RRC inactive state through a PDCCH based on the first resource information.

Optionally, the terminal device receives the multicast broadcast service in the RRC idle state or the RRC inactive state through a PDSCH based on the first resource information.

Therefore, according to the method in this embodiment, the terminal device may obtain, according to the preset rule or from the first network device, the first resource information (including at least one of the frequency domain position information, the cyclic prefix, or the subcarrier spacing), so that resource information used when the terminal device receives the multicast broadcast service in the RRC idle state or the RRC inactive state is determined. In addition, the first network device indicates the first resource information to the terminal device by using the first indication information, so that the first resource information may be flexibly selected by the first network device, and implementation is also convenient.

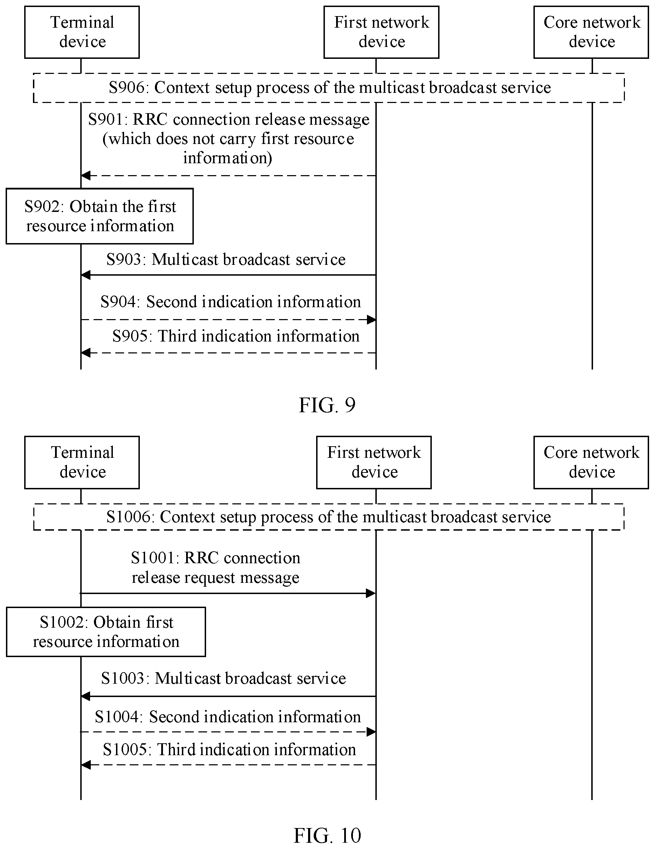

In the following, based on the embodiment in FIG. 7, FIG. 8, FIG. 9, and FIG. 10 respectively provide different embodiments of a communication method. The embodiment corresponding to FIG. 8 describes a case in which a first network device indicates first resource information to a terminal device by using first indication information. The embodiment corresponding to FIG. 9 describes a case in which a first network device implicitly notifies a terminal device of obtaining first resource information in a default manner. The embodiment in FIG. 10 describes a case in which a terminal device actively sends an RRC connection release request to a first network device, and obtains first resource information in a default manner in an RRC idle state or an RRC inactive state.

FIG. 8 is a flowchart of an embodiment of a communication method according to an embodiment of this application. The communication method includes the following steps.

S801: A terminal device receives first indication information from a first network device, and correspondingly, the first network device sends the first indication information to the terminal device.

The first indication information indicates the terminal device to receive a multicast broadcast service in a radio access control RRC idle state or an RRC inactive state based on first resource information. The first resource information includes at least one of frequency domain position information, a cyclic prefix, or a subcarrier spacing.

Optionally, the first indication information carries the first resource information, or the first indication information indicates the terminal device to continue to use resource information used when the terminal device receives the multicast broadcast service in an RRC connected state. In this case, the first resource information is the resource information used when the terminal device receives the multicast broadcast service in the RRC connected state.

Optionally, the first indication information occupies one or more bits (bits). That the first indication information occupies one bit is used as an example. If a value of the bit is "1", the terminal device may be indicated to continue to use the resource information used when receiving the multicast broadcast service in the RRC connected state. If a value of the bit is "0", the terminal device is indicated not to continue to use the resource information used when receiving the multicast broadcast service in the RRC connected state, that the resource information used when the multicast broadcast service is received changes is indicated, or the terminal device is indicated to stop using the resource information used when receiving the multicast broadcast service in the RRC connected state. In this case, neither a quantity of bits occupied by the first indication information nor the value of the bit occupied by the first indication information is limited.

Optionally, the terminal device may be implicitly indicated, by using the first indication information, to continue to use the resource information used when receiving the multicast broadcast service in the RRC connected state. For example, if the first network device sends the first indication information, the terminal device may be implicitly indicated to continue to use the resource information used when receiving the multicast broadcast service in the RRC connected state. If the first network device does not send the first indication information, the terminal device is indicated not to continue to use the resource information used when receiving the multicast broadcast service in the RRC connected state, that the resource information used when the multicast broadcast service is received changes is indicated, or the terminal device is indicated to stop using the resource information used when receiving the multicast broadcast service in the RRC connected state.

Optionally, the first indication information may be carried in messages such as a radio access control RRC message, a media access control control element MAC CE, a common channel, downlink control information DCI, or a broadcast message, and sent to the terminal device.

Further, the RRC message may be any one of the following messages: an RRC connection release message or an RRC release message.

Further, the common channel includes a broadcast control channel (broadcast control channel, BCCH), a multicast control logical channel (multicast control channel, MCCH), and a multicast traffic logical channel (multicast traffic channel, MTCH).

Further, the first network device may scramble the first indication information by using a cell radio network temporary identifier (radio network temporary identifier, RNTI). Correspondingly, the terminal device may descramble the first indication information by using the RNTI. Herein, the RNTI is associated with the multicast broadcast service. Optionally, the RNTI includes a cell radio network temporary identifier (cell radio network temporary identifier, C-RNTI) and/or a common RNTI. Specifically, the common RNTI may be a group radio network temporary identifier (group radio network temporary identifier, G-RNTI), system information RNTI (system information RNTI, SI-RNTI), or a multicast control channel RNTI (multicast control channel RNTI, MCCH-RNTI).

Optionally, the terminal device may obtain the first indication information in the RRC connected state, obtain the first indication information in a process of entering the RRC idle state, obtain the first indication information in a process of entering the RRC inactive state, obtain the first indication information in the RRC idle state, or obtain the first indication information in the RRC inactive state.

Optionally, the first resource information further includes at least one of the following: control resource set CORESET configuration information, physical downlink shared channel PDSCH configuration information, search space information, and semi-persistent scheduling (semi-persistent scheduling, SPS) configuration information.

It may be understood that the terminal device obtains the first resource information based on the first indication information.

S802: The terminal device receives the multicast broadcast service from the first network device, and correspondingly, the first network device sends the multicast broadcast service to the terminal device.

The terminal device receives the multicast broadcast service in the RRC idle state or the RRC inactive state based on the first resource information. Optionally, the terminal device receives the multicast broadcast service in the RRC idle state or the RRC inactive state through a PDCCH based on the first resource information.

Optionally, the terminal device receives the multicast broadcast service in the RRC idle state or the RRC inactive state through a PDSCH based on the first resource information.

S803: The terminal device sends second indication information to the first network device, and correspondingly, the first network device receives the second indication information from the terminal device.

In an optional step, the second indication information indicates that the terminal device has a capability to receive the multicast broadcast service in the RRC idle state or the RRC inactive state based on the first resource information, is used to request the first network device to send the first resource information, indicates the first resource information requested by the terminal device, or indicates the terminal device to request RRC connection release.

Optionally, the second indication information is carried in messages such as a radio access control RRC message, a media access control control element MAC CE, or downlink control information DCI.

Optionally, the first resource information requested by the terminal device may include at least one of frequency domain position information, a cyclic prefix, or a subcarrier spacing.

It should be noted that S803 may be before S801, or S803 may be after S801. A sequence of S801 and S803 is not limited in this embodiment of this application.

S804: The terminal device receives third indication information from the first network device, and correspondingly, the first network device sends the third indication information to the terminal device.

In an optional step, in an implementation, the third indication information indicates to stop using the first resource information, or indicates to no longer user the first resource information. Correspondingly, the terminal device stops using the first resource information based on the third indication information.

In another implementation, the third indication information indicates the terminal device to switch the resource information for receiving the multicast broadcast service from the first resource information to second resource information. The second resource information includes at least one of frequency domain position information, a cyclic prefix, or a subcarrier spacing, and the second resource information is different from the first resource information. The difference herein means that at least one of parameters corresponding to the first resource information and the second resource information is different. In addition, "switching" herein may be referred to as "replacement", which is not limited in this application.

In still another implementation, the third indication information indicates update information of the first resource information. Correspondingly, the terminal device updates the first resource information based on the third indication information. Optionally, the update information includes at least one of frequency domain position information, a cyclic prefix, or a subcarrier spacing.

Optionally, the third indication information may be carried in messages such as a radio access control RRC message, a media access control control element MAC CE, or downlink control information DCI.

Optionally, the third indication information may be carried in messages such as a radio access control RRC message, a media access control control element MAC CE, a common channel, downlink control information DCI, or a broadcast message, and sent to the terminal device.

Further, the common channel includes a broadcast control channel (broadcast control channel, BCCH), a multicast control logical channel (multicast control channel, MCCH), and a multicast traffic logical channel (multicast traffic channel, MTCH).

Further, the first network device may scramble the third indication information by using a cell radio network temporary identifier (radio network temporary identifier, RNTI). Correspondingly, the terminal device may descramble the third indication information by using the RNTI. Herein, the RNTI is associated with the multicast broadcast service. Optionally, the RNTI includes a cell radio network temporary identifier (cell radio network temporary identifier, C-RNTI) and/or a common RNTI. Specifically, the common RNTI may be a group radio network temporary identifier (group radio network temporary identifier, G-RNTI), system information RNTI (system information RNTI, SI-RNTI), or a multicast control channel RNTI (multicast control channel RNTI, MCCH-RNTI).

Optionally, any one or more of the first resource information, the first indication information, the second indication information, and the third indication information are associated with a first radio bearer. Optionally, the first radio bearer is associated with the multicast broadcast service.

It should be noted that S804 may be before S801, S804 may be after S801, or S804 and S801 may be performed simultaneously. A sequence of S801 and S804 is not limited in this embodiment of this application.

S805: Optionally, the terminal device completes a context setup process of the multicast broadcast service.

In an optional step, before S801, the terminal device completes the context setup process of the multicast broadcast service. In this process, the terminal device may obtain a context of the multicast broadcast service. The context includes one or more of the following: radio bearer configuration information and multicast frequency domain resource configuration information. Herein, the radio bearer configuration information is associated with the multicast broadcast service.

The radio bearer configuration information may include at least one of the following: a packet data convergence protocol (packet data convergence protocol, PDCP) layer configuration parameter, a radio link control (radio link control, RLC) layer configuration parameter, a media access control (media access control, MAC) layer configuration parameter, a physical layer (physical layer, PHY) configuration parameter, and a group radio network temporary identifier (group radio network temporary identifier, G-RNTI).

Optionally, the PDCP layer configuration parameter includes a PDCP sequence number length, a ciphering parameter, a header compression parameter, and the like.

Optionally, the RLC layer configuration parameter includes a logical channel number, an RLC sequence number length, an RLC mode, and the like. The RLC mode may be an acknowledged mode (acknowledged mode, AM), may be an unacknowledged mode (unacknowledged mode, UM), or may be a transparent mode (transparent mode, TM).

Optionally, the MAC layer configuration parameter includes a discontinuous reception (discontinuous reception, DRX) parameter, an uplink scheduling request (scheduling request, SR) parameter, and the like.

Optionally, the PHY layer parameter includes a power control parameter, a hybrid automatic repeat request (hybrid automatic repeat request, HARQ) feedback parameter, a channel state information (channel state information, CSI) feedback parameter, and the like.

The multicast frequency domain resource includes at least one of the following: a bandwidth, a frequency position, an SCS, a CP length, configuration information related to the CORESET, and configuration information related to the PDSCH. The frequency position includes at least one piece of the following information: a starting position of the frequency domain resource, a total quantity of used PRBs, and an ending position of the frequency domain resource, and the information may be provided by using an existing SLIV (Start and Length Indicator Value) indication mechanism. The starting position and the ending position may be indicated by using an offset value. In a possible implementation, a reference point of the offset value may be a carrier starting position Point A (a CRB numbered 0), or in another possible implementation, may be a BWP starting PRB position (a PRB numbered 0). The SLIV provides, by using a value, the starting position of the frequency domain resource and the total quantity of used PRBs. The CORESET information indicates a time-frequency resource on which G-RNTI PDCCH is located.

Therefore, according to the method in this embodiment, the terminal device obtains the first resource information (including at least one of the frequency domain position information, the cyclic prefix, or the subcarrier spacing) from the first network device, so that resource information used when the terminal device receives the multicast broadcast service in the RRC idle state or the RRC inactive state is determined. In addition, the first network device indicates the first resource information to the terminal device by using the first indication information, so that the first resource information may be flexibly selected by the network device, and implementation is also convenient.

FIG. 9 is a flowchart of another embodiment of a communication method according to this application. The communication method includes the following steps.

S901: A first network device sends an RRC connection release message to a terminal device, and correspondingly, the terminal device receives the RRC connection release message from the first network device. The RRC connection release message does not carry first resource information.

In an optional step, when the first network device sends the RRC connection release message and content carried in the RRC connection release message may be determined by the first network device according to some rules, or depend on implementation of the first network device.

In a possible implementation, the first network device may receive an RRC connection release request message from the terminal device, and then send the RRC connection release message to the terminal device based on the release request message.

In another possible implementation, the first network device may send the RRC connection release message to the terminal device based on a network load status. For example, the first network device may send the RRC connection release message based on a quantity of LTEs in an RRC connected state.

In yet another possible implementation, the first network device may send the RRC connection release message to the terminal device based on a service transmission status of the terminal device. For example, if a terminal device has not transmitted a unicast service for a long time but is interested in a broadcast service, the first network device may send the RRC connection release message to the terminal device.

S902: The terminal device obtains the first resource information.

The terminal device may obtain the first resource information in a default (for example, according to a protocol specification or a preset rule) manner. Specifically, the terminal device obtains the first resource information, and a first resource indicated by the first resource information completely or partially overlaps a frequency domain resource corresponding to a first control resource set, or
a first resource indicated by the first resource information is a predefined resource, or
a first resource indicated by the first resource information is a resource used when the terminal device receives a multicast broadcast service in an RRC connected state.

Optionally, the first control resource set is CORESET#0 (or referred to as a CORESET numbered 0).

Optionally, the predefined resource may be a resource specified in a protocol, or is referred to as a default resource (default resource). Herein, the predefined resource includes frequency domain position information, a cyclic prefix, or a subcarrier spacing.

S903: The terminal device receives the multicast broadcast service from the first network device, and correspondingly, the network device sends the multicast broadcast service to the terminal device.

S904: Optionally, the terminal device sends second indication information to the first network device, and correspondingly, the first network device receives the second indication information from the terminal device.

S905: Optionally, the terminal device receives third indication information from the first network device, and correspondingly, the first network device sends the third indication information to the terminal device.

For example, for S903 to S905, refer to S802 to S804, and details are not described herein again.

S906: Optionally, the terminal device completes a context setup process of the multicast broadcast service.

For example, for S906, refer to S805. Details are not described herein again.

Therefore, according to the method in this embodiment, the first network device implicitly notifies, by not carrying the first resource information in the RRC connection release message, the terminal device of obtaining the first resource information (including at least one of the frequency domain position information, the cyclic prefix, or the subcarrier spacing) in the default manner, so that resource information used when the terminal device receives the multicast broadcast service in an RRC idle state or an RRC inactive state is determined. In addition, the first network device may release, according to a specific rule (for example, a quantity of RRC connections), some terminal devices to the RRC idle state or the RRC inactive state to receive the multicast broadcast service. On one hand, control of the first network device is more flexible. On the other hand, the first network device implicitly notifies the terminal device of the method for obtaining the first resource information in the default manner, thereby reducing signaling overheads of configuring the first resource information by the first network device.

FIG. 10 is a flowchart of yet another embodiment of a communication method according to this application. The communication method includes the following steps.

S1001: A terminal device sends an RRC connection release request message to a first network device, and correspondingly, the first network device receives the RRC connection release request message from the terminal device.

The RRC connection release request message is used to request the first network device to release an RRC connection.

S1002: The terminal device obtains first resource information.

In a possible implementation, the terminal device obtains the first resource information from the first network device. For example, for an obtaining manner, refer to S801, and details are not described herein again.

In another possible implementation, the terminal device may obtain the first resource information in a default (for example, according to a protocol specification or a preset rule) manner. For example, for an obtaining manner, refer to S902, and details are not described herein again.

It should be noted that S1001 may be before S1002, S1001 may be after S1002, or S1001 and S1002 may be performed simultaneously. A sequence of S1001 and S1002 is not limited in this embodiment of this application.

S1003: The terminal device receives a multicast broadcast service from the first network device, and correspondingly, the first network device sends the multicast broadcast service to the terminal device.

S1004: Optionally, the terminal device sends second indication information to the first network device, and correspondingly, the first network device receives the second indication information from the terminal device.

S1005: Optionally, the terminal device receives third indication information from the first network device, and correspondingly, the first network device sends the third indication information to the terminal device.

For example, for S1003 to S1005, refer to S802 to S804, and details are not described herein again.

S1006: Optionally, the terminal device completes a context setup process of the multicast broadcast service.

For example, for S1006, refer to S805, and details are not described herein again.

Therefore, according to the method in this embodiment, the terminal device may independently determine whether to enter an RRC idle state to obtain the multicast broadcast service, or independently determine whether to enter an RRC inactive state to obtain the multicast broadcast service. On one hand, the terminal device independently determines to send the RRC connection release request, which is simple and flexible. On the other hand, a large quantity of terminal devices in an RRC connected state can be prevented from increasing network load.

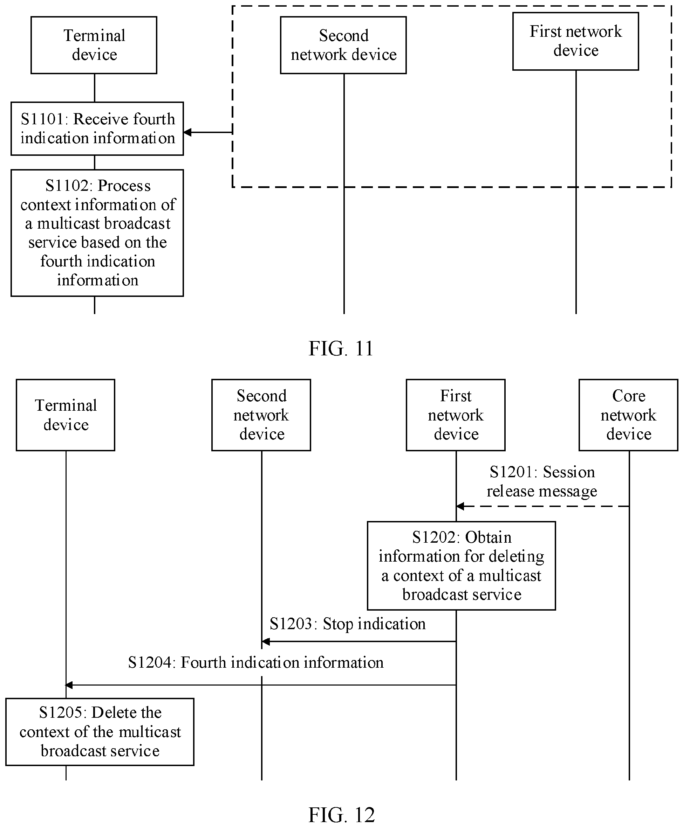

Refer to FIG. 11. Another embodiment of a communication method according to an embodiment of this application includes the following steps.

S1101: A terminal device receives fourth indication information.

The fourth indication information indicates the terminal device to delete a context of a multicast broadcast service, indicates the terminal device to continue to use a context of a multicast broadcast service, indicates the terminal device to enter a connected state to obtain a context of a multicast broadcast service, or indicates the terminal device to update context information of a multicast broadcast service.

In a possible implementation, the terminal device receives the fourth indication information from a first network device, and correspondingly, the first network device sends the fourth indication information to the terminal device. Herein, the first network device is a network device that currently serves the terminal device.

Optionally, there are a plurality of possible manners in which the first network device obtains the fourth indication information. For example, the first network device may obtain the fourth indication information from the first network device, from a core network device, or from another network device. It may be understood that that the first network device obtains the fourth indication information from the first network device may mean that the first network device generates the fourth indication information, and then sends the generated fourth indication information to the terminal device.

In another possible implementation, the terminal device receives the fourth indication information from a second network device, and correspondingly, the second network device sends the fourth indication information to the terminal device. Herein, the second network device is a network device that previously served the terminal device.

Optionally, there are a plurality of possible manners in which the second network device obtains the fourth indication information. For example, the second network device may obtain the fourth indication information from the second network device, from the first network device, or from another network device. It may be understood that that the second network device obtains the fourth indication information from the second network device may mean that the second network device generates the fourth indication information, and then sends the generated fourth indication information to the terminal device.

It can be learned that the terminal device may obtain the fourth indication information from the first network device, and may also obtain the fourth indication information from the second network device. This enriches a manner of obtaining the fourth indication information.

Optionally, the fourth indication information may be carried in a radio access control RRC message, a media access control control element MAC CE, a common channel, downlink control information DCI, or a paging message.

Further, the fourth indication information may be carried in one of the following messages: an RRC connection release message, an RRC connection resume message, an RRC resume message, an RRC reconfiguration message, or an RRC connection reconfiguration message.

Further, the common channel includes a broadcast control channel (broadcast control channel, BCCH), a multicast control logical channel (multicast control channel, MCCH), and a multicast traffic logical channel (multicast traffic channel, MTCH).

Further, the DCI may be scrambled by using an RNTI associated with the multicast broadcast service, or scrambled by using a paging radio network temporary identifier P-RNTI. Herein, the RNTI associated with the multicast broadcast service includes a C-RNTI and/or a G-RNTI.

Optionally, there are a plurality of possible manners as for time when the terminal device receives the fourth indication information. For example, the terminal device may receive the fourth indication information in an RRC idle state, receive the fourth indication information in an RRC inactive state, receive the fourth indication information in a process of entering the RRC connected state, or receive the fourth indication information after entering the RRC connected state.

It can be learned that the terminal device may obtain the fourth indication information in the RRC idle state or the RRC inactive state, and may also obtain the fourth indication information in the RRC connected state. This enriches the manner of obtaining the fourth indication information.

S 1102: The terminal device processes the context information of the multicast broadcast service based on the fourth indication information.

It may be understood that the terminal device performs different processing on the context information of the multicast broadcast service based on different content indicated by the fourth indication information.

In a possible implementation, the fourth indication information indicates the terminal device to delete the context information of the multicast broadcast service. Correspondingly, the terminal device deletes the context of the multicast broadcast service based on the fourth indication information.

In another possible implementation, the fourth indication information indicates the terminal device to continue to use the context of the multicast broadcast service. Correspondingly, the terminal device learns, based on the fourth indication information, that the context of the original multicast broadcast service can continue to be used. In other words, the terminal device can continue to use the context of the old multicast broadcast service.

In yet another possible implementation, the fourth indication information indicates the terminal device to enter the RRC connected state to obtain the context of the multicast broadcast service. Correspondingly, the terminal device may trigger a random access process to enter the RRC connected state to obtain the context of the multicast broadcast service.

In still another possible implementation, the fourth indication information indicates the terminal device to update the context information of the multicast broadcast service. Correspondingly, the terminal device may update the context of the multicast broadcast service based on the fourth indication information.

It should be noted that, for context content of the multicast broadcast service, refer to the description in S805. Details are not described herein again.

Therefore, according to the method in this embodiment, the terminal device may receive the fourth indication information, and then perform corresponding processing (for example, deleting or updating the context information of the multicast broadcast service) on the context information of the multicast broadcast service based on the fourth indication information, so that the terminal device can process the context information of the multicast broadcast service and better receive the multicast broadcast service. In addition, the fourth indication information may be flexibly selected by the first network device or the second network device, thereby increasing flexibility of adjustment and control of the network device.

In the following, based on the embodiment in FIG. 11, FIG. 12, FIG. 13, and FIG. 14 respectively provide different embodiments of another communication method.

FIG. 12 is a flowchart of an embodiment of a communication method according to this application. As shown in FIG. 12, the communication method includes the following steps.

S1201: Optionally, a core network device sends a session release message to a first network device, and correspondingly, the first network device receives the session release message from the core network device.

The session release message indicates that a session of a multicast broadcast service ends, indicates that a session of a multicast broadcast service needs to be released, indicates that a multicast broadcast service is no longer sent, or indicates that multicast broadcast service communication is no longer performed.

Optionally, the session release message may alternatively be referred to as a "session release message of the multicast broadcast service" or another name. This is not limited in this application.

Optionally, the first network device determines, based on the session release message, how to process a context of the multicast broadcast service. Possible processing includes:

Manner a1: The first network device retains the context of the multicast broadcast service, but the first network device internally marks that the multicast broadcast service stops. The context of the multicast broadcast service includes bearer configuration of the multicast broadcast service and an identifier of the multicast broadcast service.

Optionally, the first network device may maintain a correspondence between the identifier of the multicast broadcast service and the retained context of the multicast broadcast service. The first network device may further notify one or more second network devices of the correspondence.

It can be learned that, according to the method, when a same multicast broadcast service subsequently needs the context (for example, when the multicast broadcast service restarts), the previously retained context may be used, thereby avoiding a delay and signaling overheads caused by re-establishing a context for the multicast broadcast service.

Manner a2: The first network device deletes the context of the multicast broadcast service.

It can be learned that, according to the method, the first network device may delete corresponding context information when learning that the multicast broadcast service ends, thereby saving storage space and maintenance costs of the first network device.

It should be noted that, in a possible implementation, Manner a1 and Manner a2 above may be used as new functions, and are carried by an improved session release message. In other words, the session release message includes a new indication indicating a processing manner (for example, indicating Manner a1 or Manner a2) of the context of the multicast broadcast service. In another possible implementation, the two manners may be used as implementation functions of the first network device. In this case, a function of the session release message may be the same as that of a current session release message, and does not include indication information for the two manners. The first network device may select Manner a1 or Manner a2. In this way, different processing is performed on the context of the multicast broadcast service.

S 1202: The first network device obtains information for deleting the context of the multicast broadcast service.

There are a plurality of implementations in which the first network device obtains the information for deleting the context.

For example, in a possible implementation, the first network device obtains the information for deleting the context of the multicast broadcast service. In this manner, the first network device determines to delete the context of the multicast broadcast service.

In another possible implementation, the first network device obtains the information for deleting the context from the core network device. In other words, in this manner, the first network device may determine, based on the indication information from the core network device, to delete the context of the multicast broadcast service.

S 1203 : The first network device sends a stop indication to the second network device, and correspondingly, the second network device receives the stop indication from the first network device.

The second network device is another network device in a RAN-based notification area (RAN-based Notification Area, RNA).

The stop indication indicates the second network device to stop the multicast broadcast service, or indicates the second network device to no longer provide the multicast broadcast service.

Optionally, the second network device stops, based on the stop indication, sending of the multicast broadcast service, or no longer provides the multicast broadcast service.

Further, the second network device may determine, based on the stop indication, how to process the context of the multicast broadcast service. A processing manner needs to be consistent with the processing manner selected by the first network device. Possible processing includes:

Manner b1: The second network device retains the context of the multicast broadcast service, and the context of the multicast broadcast service includes bearer configuration of the multicast broadcast service and an identifier of the multicast broadcast service. However, the second network device internally marks that the multicast broadcast service stops.

Manner b2: The second network device deletes the context of the multicast broadcast service.

For descriptions and advantageous effects of Manner b1 and Manner b2, refer to Manner a1 and Manner a2 in S1201. Details are not described herein again.

S1204: The first network device sends fourth indication information to a terminal device, and correspondingly, the terminal device receives the fourth indication information from the first network device.

The terminal device may be in an RRC idle state, or may be in an RRC inactive state.

The fourth indication information indicates the terminal device to delete the context of the multicast broadcast service.

It can be learned from the description of S1203 that the processing manner of the second network device needs to be consistent with the processing manner selected by the first network device. Therefore, the first network device sends the fourth indication information to the terminal device, and the second network device also sends the fourth indication information to the terminal device. Correspondingly, the terminal device receives the fourth indication information from the first network device and/or the second network device.

Optionally, the fourth indication information may be carried in a common channel or downlink control information DCI, and sent to the terminal device.

Further, the common channel includes a broadcast control channel (broadcast control channel, BCCH), a multicast control logical channel (multicast control channel, MCCH), and a multicast traffic logical channel (multicast traffic channel, MTCH).

Further, the first network device may scramble the fourth indication information by using a cell radio network temporary identifier (radio network temporary identifier, RNTI). Correspondingly, the terminal device may descramble the fourth indication information by using a common RNTI. Herein, the common RNTI may be a group radio network temporary identifier (group radio network temporary identifier, G-RNTI), system information RNTI (system information RNTI, SI-RNTI), a multicast control channel RNTI (multicast control channel RNTI, MCCH-RNTI), or a paging RNTI (paging RNTI, P-RNTI).

Further, there are a plurality of specific implementations of the fourth indication information. In a possible implementation, the fourth indication information may include one or more bits (bits), and further indicate, by using different values of the bit, whether to delete the context of the multicast broadcast service. For example, the fourth indication information occupies one bit. If a value of the bit is "1", the terminal device may be indicated to delete the context of the multicast broadcast service. If a value of the bit is "0", the terminal device is indicated not to delete the context of the multicast broadcast service.

In another possible implementation, the fourth indication information may include one or more fields, and further indicate, by using existence of the one or more fields, whether to delete the context of the multicast broadcast service. For example, if the first network device sends the fourth indication information, the terminal device is indicated to delete the context of the multicast broadcast service. If the first network device does not send the fourth indication information, the terminal device is indicated not to delete the context of the multicast broadcast service.

It should be noted that S1204 may be performed before S1203, S1204 may be performed after S1203, or S1204 and S1203 may be performed simultaneously. A sequence of S1204 and S1203 is not limited in this embodiment of this application.

S1205: The terminal device deletes the context of the multicast broadcast service based on the fourth indication information.

Therefore, according to the method in this embodiment, the first network device may send the fourth indication information to the terminal device in the idle state or the inactive state, so that the terminal device in the idle state or the inactive state can obtain the information for deleting the context of the multicast broadcast service. In this way, a delay and signaling overheads required for the terminal device to enter a connected state are avoided. In addition, the first network device sends the stop indication to the second network device, so that the second network device can determine, based on the stop indication, whether to delete the context of the multicast broadcast service, which is conducive to storage space and maintenance costs of the second network device.

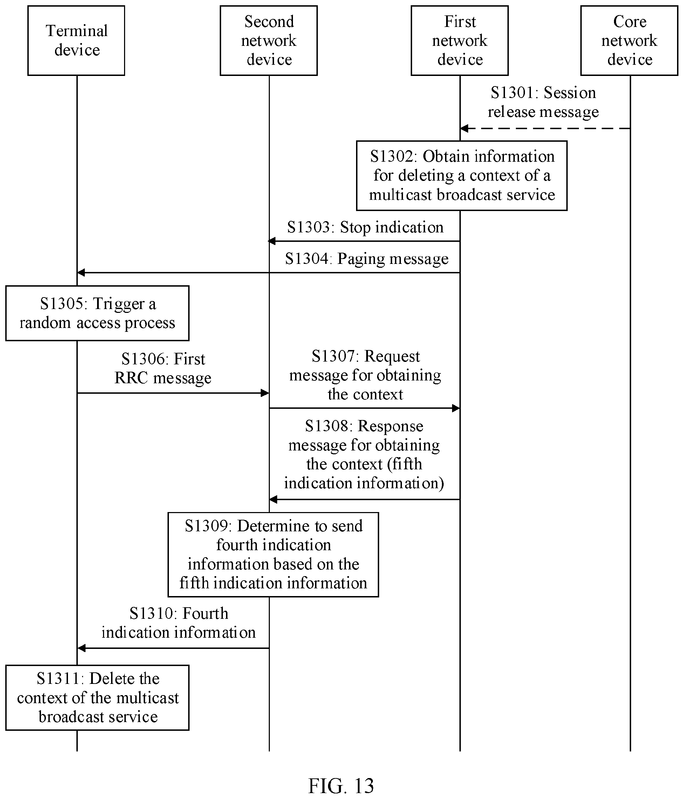

FIG. 13 is a flowchart of yet another embodiment of a communication method according to this application. The communication method includes the following steps.

S1301: Optionally, a core network device sends a session release message to a first network device, and correspondingly, the first network device receives the session release message from the core network device.

The session release message indicates that a session of a multicast broadcast service ends, indicates that a session of a multicast broadcast service needs to be released, indicates that a multicast broadcast service is no longer sent, or indicates that multicast broadcast service communication is no longer performed.

S1302: The first network device obtains information for deleting a context of the multicast broadcast service.

S1303: The first network device sends a stop indication to a second network device, and correspondingly, the second network device receives the stop indication from the first network device.

The second network device is another network device in a RAN-based notification area (RAN-based Notification Area, RNA).

The stop indication indicates the second network device to stop the multicast broadcast service, or indicates the second network device to no longer provide the multicast broadcast service.

The network device does not know a location of a terminal device in an RRC idle state or an RRC inactive state, that is, the network device does not know coverage of a network node within which the terminal device in the RRC idle state or the RRC inactive state falls. Therefore, if the terminal device needs to stop receiving the multicast broadcast service, all network devices on which the terminal device may camp need to receive the stop indication, so that these network devices can stop the multicast broadcast service or no longer provide the multicast broadcast service based on the stop indication. To enable the terminal to delete the context of the multicast broadcast service, these network devices further need to send fourth indication information to the terminal device, so that the terminal device can successfully receive the fourth indication information and delete, based on the fourth indication information, the context of the multicast broadcast service. For example, for S1301 to S1303, refer to S1201 to S1203, and details are not described herein again.

S1304: The first network device sends a paging message to the terminal device, and correspondingly, the terminal device receives the paging message from the first network device.

The terminal device may be in the RRC idle state, or may be in the RRC inactive state.

It can be learned from the description of S1203 that the processing manner of the second network device needs to be consistent with the processing manner selected by the first network device. Therefore, the first network device sends the paging message to the terminal device, and the second network device also sends the paging message to the terminal device. Correspondingly, the terminal device receives the paging message from the first network device and/or the second network device.

S1305: The terminal device determines to initiate a random access process.

Specifically, the terminal device determines, based on the received paging message, to trigger the random access process.

In a possible implementation, the paging message includes a paging record list. The terminal device receives the paging message sent by the first network device, and if determining that the paging message includes an identifier of the terminal device, determines to initiate the random access process.

In another possible implementation, the paging message includes an identifier of the multicast broadcast service. The terminal device receives the paging message sent by the first network device, and if determining that the paging message includes an identifier of a multicast broadcast service in which the terminal device is interested, determines to initiate the random access process.

S1306: The terminal device sends a first RRC message to the second network device.

Specifically, the terminal device may send the first RRC message to the second network device in the random access process, and the first RRC message is used to request or resume an RRC connection.

Optionally, the first RRC message is one of the following: an RRC connection setup request message, an RRC connection resume request message, an RRC setup request message, or an RRC resume request message.

S1307: The second network device sends, to the first network device, a request message for obtaining the context.

Specifically, the second network device sends, based on the first RRC message to the first network device, the request message for obtaining the context.

S1308: The first network device sends, to the second network device, a response message for obtaining the context.

Specifically, in response to the request message for obtaining the context, the first network device sends, to the second network device, the response message for obtaining the context.

S1309: The second network device determines, based on the response message for obtaining the context, to send the fourth indication information to the terminal device.

In a possible implementation, the response message for obtaining the context includes the fifth indication information. The fifth indication information indicates that the multicast broadcast service stops, indicates that the multicast broadcast service is no longer sent, indicates that the context of the multicast broadcast service is deleted, indicates that the context of the multicast broadcast service is removed, or indicates that the context of the multicast broadcast service is released.

The second network device receives the response message that is for obtaining the context and that is sent by the first network device, and if determining that the response message includes the fifth indication information, the second network device determines to send the fourth indication information to the terminal device.

In another possible implementation, the second network device receives the response message that is for obtaining the context and that is sent by the first network device, and if determining that the response message does not include the identifier of the multicast broadcast service, the second network device determines to send the fourth indication information to the terminal device.

Optionally, the method further includes: If the second network device determines to send the fourth indication information to the terminal device, at least one of the following may be performed: deleting a radio bearer of the multicast broadcast service, releasing a PDCP entity related to the radio bearer of the multicast broadcast service, releasing an RLC entity related to the radio bearer of the multicast broadcast service, and releasing a MAC entity related to the radio bearer of the multicast broadcast service.

S1310: The second network device sends the fourth indication information to the terminal device.

The fourth indication information indicates the terminal device to delete the context of the multicast broadcast service.

Optionally, the second network device may send the fourth indication information to the terminal device in the random access process, or may send the fourth indication information to the terminal device after the random access process is completed.

Further, the second network device sends the fourth indication information to the terminal device by using an RRC message in the random access process, or sends the fourth indication information to the terminal device by using an RRC message obtained after the random access process is completed.

Further, the fourth indication information may be carried in one of the following messages: an RRC connection release message, an RRC connection resume message, an RRC resume message, an RRC reconfiguration message, or an RRC connection reconfiguration message.

In this way, in the method for sending the fourth indication information to the terminal device by using the RRC message obtained after the random access process is completed, an existing protocol may be used as much as possible, to reduce impact of a standard. In addition, signaling overheads can be reduced by using the method for sending the fourth indication information to the terminal device by using the RRC message in the random access process.

S1311: The terminal device deletes the context of the multicast broadcast service based on the fourth indication information.

Therefore, according to the method in this embodiment, the first network device may send the paging message to the terminal device in the idle state or the inactive state, so that the terminal device obtains, in a process of entering a connected state or after entering a connected state, the information for deleting the context of the MBS multicast broadcast service. This not only implements MBS context deletion for such a terminal device, but also enriches the manner for deleting the MBS context. In addition, the first network device sends the stop indication to the second network device, so that the second network device can determine, based on the stop indication, whether to delete the context of the multicast broadcast service, which is conducive to storage space and maintenance costs of the second network device.

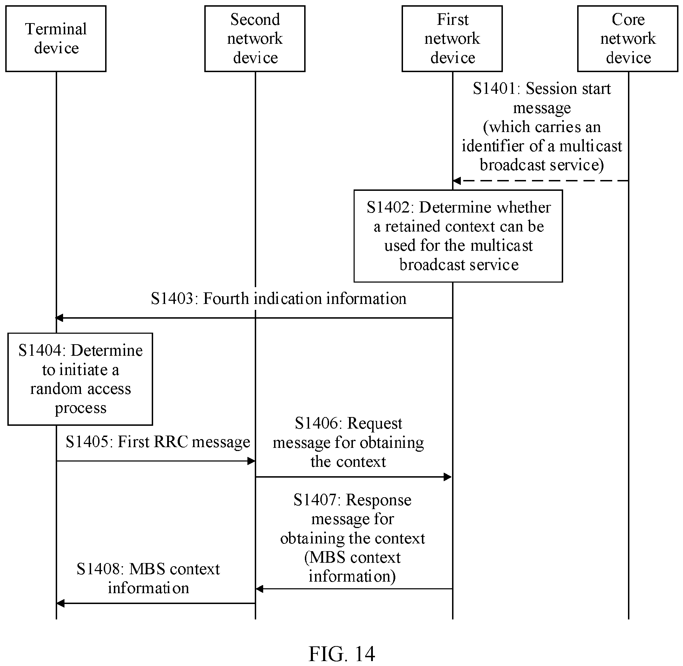

FIG. 14 is a flowchart of yet another embodiment of a communication method according to this application. The communication method includes the following steps:

S1401: A core network device sends a session start message to a first network device, and correspondingly, the first network device receives the session start message from the core network device.

The session start message includes an identifier of a multicast broadcast service (MBS for short).

The session start message indicates start of an MBS session, indicates startup of an MBS session, indicates start of sending the MBS, or indicates start of performing MBS communication.

Optionally, the identifier of the MBS may be a temporary mobile group identity (temporary mobile group identity, TMGI).

S1402: The first network device determines whether a retained MBS context can be used for the MBS.

Specifically, after receiving the session start message, the first network device may determine, based on the identifier of the MBS in the session start message and a correspondence between the identifier of the MBS and the retained MBS context, whether the retained MBS context can be used for the MBS. In other words, the first network device determines whether the retained MBS context can be used for the MBS. Optionally, the correspondence between the identifier of the MBS and the retained MBS context may be one-to-one, one-to-many, many-to-one, or many-to-many. This is not limited in this application.

For example, as shown in Table 1, the correspondence between the identifier of the MBS and the MBS context is one-to-one correspondence. If the session start message includes an identifier of an MBS 2, based on the identifier of the MBS 2 and the correspondence in Table 1, it may be determined that a retained MBS context (an MBS context 2) can be used for the MBS 2.

**Table 1: Correspondence between MBS identifiers and MBS contexts**

| Identifier of an MBS | Retained MBS context |
|---|---|
| Identifier of an MBS 1 | Context 1 of an MBS |
| Identifier of an MBS 2 | Context 2 of the MBS |
| ... | ... |

Optionally, there are a plurality of manners in which the first network device obtains the correspondence. For example, the first network device may maintain the MBS context and generate the correspondence. Alternatively, the first network device may receive the correspondence from another network device (for example, the core network device or a second network device). This is not limited in this application.

S 1403 : The first network device sends fourth indication information to a terminal device, and correspondingly, the terminal device receives the fourth indication information from the first network device.

The terminal device may be in an RRC idle state, or may be in an RRC inactive state.

The fourth indication information indicates the MBS context information, indicates the terminal device to continue to receive the MBS by using an original MBS context (or referred to as an old MBS context), or indicates the terminal device to enter an RRC connected state to obtain the MBS context.

The network device does not know a location of the terminal device in the RRC idle state or the RRC inactive state, that is, the network device does not know coverage of a network node within which the terminal device in the RRC idle state or the RRC inactive state falls. Therefore, to enable the terminal device to successfully receive the fourth indication information and perform corresponding context processing based on the fourth indication information, all network devices on which the terminal device may camp need to send the fourth indication information to the terminal device. Therefore, the fourth indication information received by the terminal device may come from the first network device and/or the second network device. The first network device is a serving network device, and the second network device is a network device corresponding to an RNA.

It may be understood that the fourth indication information received by the terminal device may obtain the MBS context in different manners based on different content indicated by the fourth indication information. Details are as follows:

Case a: If the fourth indication information indicates the MBS context information, the terminal device may obtain the MBS context based on the MBS context information. Herein, the MBS context information may include all or a part of the MBS context.

Case b: If the fourth indication information indicates the terminal device to continue to receive the MBS by using the original MBS context (or referred to as the old MBS context), the terminal device may continue to receive the MBS by using the original MBS context based on the fourth indication information.

Case c: If the fourth indication information indicates the terminal device to enter the RRC connected state to obtain the MBS context, the terminal device needs to further determine whether to initiate a random access process, that is, perform one or more of steps S1404 to S 1408. For details of S 1404 to S 1408, refer to corresponding steps. Details are not described herein.

It should be noted that, for Case a and Case b, the terminal device may directly obtain the MBS context based on the fourth indication information, and does not need to perform steps S1404 to S1408. Therefore, for Case a and Case b, the first network device sends the fourth indication information to the terminal device, so that the terminal device in the RRC idle state or the RRC inactive state can obtain the MBS context information and save a delay and signaling overheads of entering the RRC connected state.

Optionally, the fourth indication information may be carried in a common channel, downlink control information DCI, or a paging message, and sent to the terminal device.

Further, the common channel includes a broadcast control channel (broadcast control channel, BCCH), a multicast control logical channel (multicast control channel, MCCH), and a multicast traffic logical channel (multicast traffic channel, MTCH).

Further, the first network device may scramble the fourth indication information by using a cell radio network temporary identifier (radio network temporary identifier, RNTI). Correspondingly, the terminal device may descramble the fourth indication information by using a common RNTI. Herein, the common RNTI may be a group radio network temporary identifier (group radio network temporary identifier, G-RNTI), system information RNTI (system information RNTI, SI-RNTI), a multicast control channel RNTI (multicast control channel RNTI, MCCH-RNTI), or a paging RNTI (paging RNTI, P-RNTI).

Further, there are a plurality of specific implementations of the fourth indication information, including:

In a possible implementation, the fourth indication information may include one or more bits (bits), and further indicate, by using different values of the bit, how the terminal device obtains the MBS context. For example, if the fourth indication information occupies one bit, and if a value of the bit is "1", the terminal device is indicated to continue to use the original MBS context. If a value of the bit is "0", the terminal device is indicated to enter the RRC connected state to obtain the MBS context.

In another possible implementation, the fourth indication information may include one or more fields, and further indicate the terminal device, by using existence of the one or more fields, how to obtain the MBS context. For example, if the first network device sends a first field by using the fourth indication information, the terminal device is indicated to continue to use the original MBS context. If the first network device sends a second field by using the fourth indication information, the terminal device is indicated to enter the RRC connected state to obtain the MBS context.

S1405: The terminal device sends a first RRC message to the second network device.

Specifically, the terminal device may send the first RRC message to the second network device in the random access process, and the first RRC message is used to request or resume an RRC connection.

Optionally, the first RRC message is one of the following: an RRC connection setup request message, an RRC connection resume request message, an RRC setup request message, or an RRC resume request message.

S1406: The second network device sends, to the first network device, a request message for obtaining the context.

Specifically, the second network device sends, based on the first RRC message to the first network device, the request message for obtaining the context.

S1407: The first network device sends, to the second network device, a response message for obtaining the context.

Specifically, in response to the request message for obtaining the context, the first network device sends, to the second network device, the response message for obtaining the context.

The response message for obtaining the context includes the MBS context information. Herein, the MBS context information may include all or a part of the MBS context.

S1408: The second network device sends the MBS context information to the terminal device.

Correspondingly, the terminal device receives the MBS context information from the second network device, and further receives the MBS based on the MBS context information.

Optionally, the second network device may send the MBS context information to the terminal device in the random access process, or may send the MBS context information to the terminal device after the random access process is completed.

Further, the second network device sends the MBS context information to the terminal device by using an RRC message in the random access process, or sends the MBS context information to the terminal device by using an RRC message obtained after the random access process is completed.

Further, the MBS context information may be carried in one of the following messages: an RRC connection release message, an RRC connection resume message, an RRC resume message, an RRC reconfiguration message, or an RRC connection reconfiguration message.

It should be noted that (1) the embodiments corresponding to FIG. 7 to FIG. 10 may be implemented independently, or may be implemented in combination with the embodiments corresponding to FIG. 11 to FIG. 14 (for example, the embodiment of FIG. 10 may be combined with the embodiment of FIG. 13). Alternatively, different solutions in different embodiments may be implemented in combination (for example, all or some of the solutions involved in FIG. 10 may be combined with the embodiment corresponding to FIG. 12). This is not specifically limited.

(2) Step numbers in the flowcharts (for example, FIG. 7, FIG. 8, and FIG. 9) described in embodiments of this application are merely examples of execution procedures, and do not constitute a limitation on an execution sequence of the steps. In embodiments of this application, there is no strict execution sequence between steps that do not have a time sequence dependency relationship with each other.

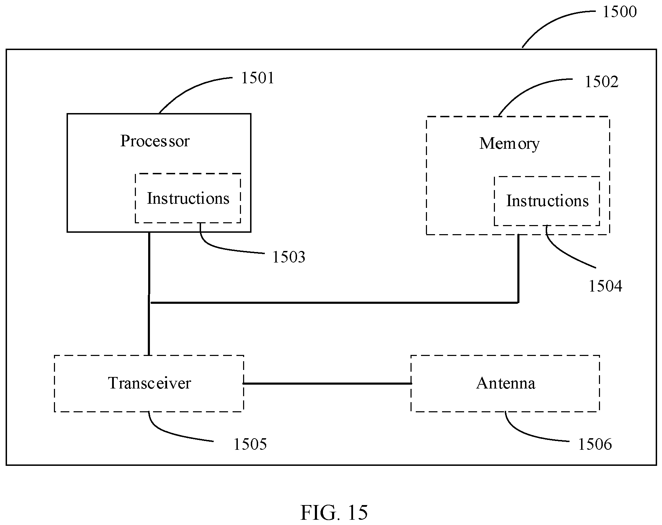

FIG. 15 is a schematic diagram of a structure of a communication apparatus according to an embodiment of this application. A communication apparatus 1500 includes one or more processors 1501. A processor 1501 may alternatively be referred to as a processing unit, and may implement a specific control function. The processor 1501 may be a general-purpose processor, a dedicated processor, or the like. For example, the processor 1501 includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 1500, execute a software program, and/or process data. Different processors may be independent components, or may be integrated into one or more processors, for example, integrated into one or more application-specific integrated circuits.

Optionally, the communication apparatus 1500 includes one or more memories 1502, configured to store instructions 1504, and the instructions may be run on the processor, so that the terminal device 1500 performs the method described in the foregoing method embodiments. Optionally, the memory 1502 may further store data. The processor and the memory may be separately disposed, or may be integrated together.

Optionally, the communication apparatus 1501 may include instructions 1503 (which may alternatively be referred to as code or a program in some cases), and the instructions 1503 may be run on the processor, so that the communication apparatus 1500 performs the method described in the foregoing embodiments. The processor 1501 may store data.

Optionally, the communication apparatus 1500 may further include a transceiver 1505 and an antenna 1506. The transceiver 1505 may be referred to as a transceiver unit, a transceiver, a transceiver circuit, a transceiver, an input/output interface, or the like, and is configured to implement a transceiver function of the communication apparatus 1500 via the antenna 1506.

Optionally, the communication apparatus 1500 may further include one or more of the following components: a wireless communication module, an audio module, an external memory interface, an internal memory, a universal serial bus (universal serial bus, USB) port, a power management module, an antenna, a speaker, a microphone, an input/output module, a sensor module, a motor, a camera, a display, or the like. It may be understood that, in some embodiments, the UE 1500 may include more or fewer components, or integrate some components, or split some components. These components can be hardware, software, or a combination implementation of software and hardware.

The processor 1501 and the transceiver 1505 described in this application may be implemented in an integrated circuit (integrated circuit, IC), an analog IC, a radio frequency integrated circuit (radio frequency integrated circuit, RFID), a mixed-signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a larger device (for example, a module that can be embedded in another device). For details, refer to the foregoing descriptions of the terminal device and the network device. Details are not described herein again.

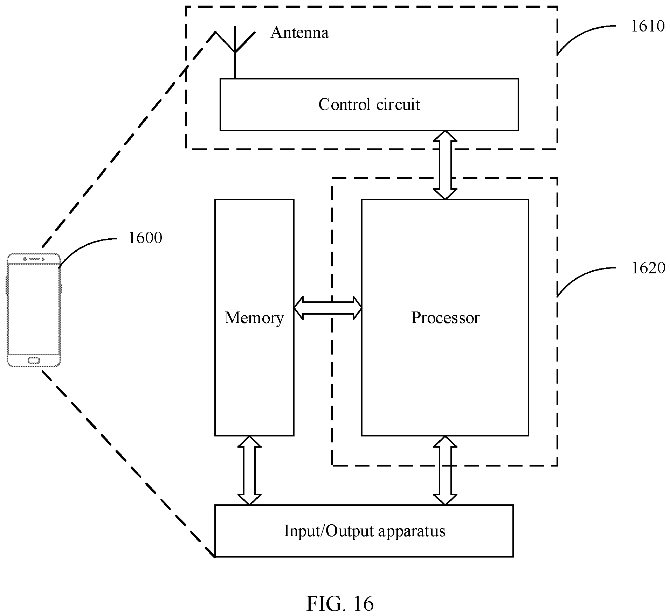

FIG. 16 is a schematic diagram of a structure of a terminal device according to an embodiment of this application.

As shown in FIG. 16, a terminal device 1600 includes a processor, a memory, a control circuit, an antenna, and an input/output apparatus. The processor is mainly configured to: process a communication protocol and communication data, control the entire terminal device 1600, execute a software program, and process data of the software program. The memory is mainly configured to store the software program and the data. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, a microphone, or a keyboard, is mainly configured to: receive data input by a user and output data to the user.

For example, the terminal device 1600 is a mobile phone. After the terminal device 1600 is powered on, the processor may read a software program in a storage unit, explain and execute instructions of the software program, and process data of the software program. When data needs to be sent wirelessly, the processor outputs a baseband signal to the control circuit after performing baseband processing on the to-be-sent data. After performing radio frequency processing on the baseband signal, the control circuit sends a radio frequency signal in an electromagnetic wave form via the antenna. When data is sent to the terminal device 1600, the control circuit receives a radio frequency signal via the antenna, converts the radio frequency signal into a baseband signal, and outputs the baseband signal to the processor. The processor converts the baseband signal into data, and processes the data.

A person skilled in the art may understand that, for ease of description, FIG. 16 shows only one memory and one processor. In some embodiments, the terminal device 1600 may include a plurality of processors and memories. The memory may alternatively be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device 1600, execute the software program, and process the data of the software program. Functions of the baseband processor and the central processing unit are integrated into the processor in FIG. 16. A person skilled in the art may understand that the baseband processor and the central processing unit each may be an independent processor, and are interconnected by using technologies such as a bus. The terminal device 1600 may include a plurality of baseband processors to adapt to different network standards, and the terminal device 1600 may include a plurality of central processing units to enhance a processing capability of the terminal device 1600. Components of the terminal device 1600 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1610 of the terminal device 1600, and the processor that has a processing function may be considered as a processing unit 1620 of the terminal device 1600. As shown in FIG. 16, the terminal device 1600 includes the transceiver unit 1610 and the processing unit 1620. The transceiver unit may alternatively be referred to as a transceiver, a transceiver machine, a transceiver apparatus, or the like. Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. For example, the receiving unit may alternatively be referred to as a receiving machine, a receiver, a receiving circuit, or the like. The sending unit may alternatively be referred to as a transmitter machine, a transmitter, a transmitter circuit, or the like.

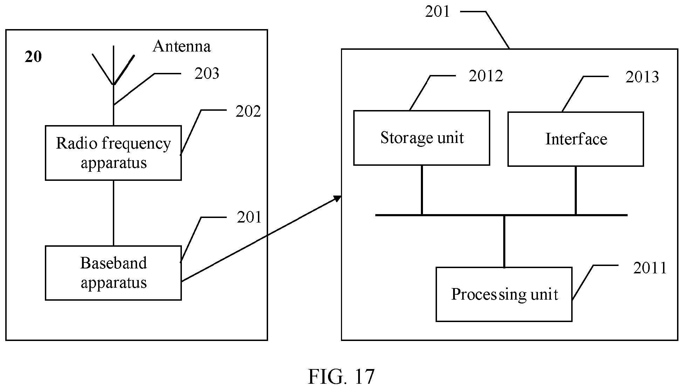

FIG. 17 is a schematic diagram of a structure of a network device according to an embodiment of this application. As shown in FIG. 17, a network device 20 may serve as a first network device that is relative to one or more UEs and that has functions of the first network device, or may serve as a second network device that is relative to one or more UEs and that has functions of the second network device. The network device includes a baseband apparatus 201, a radio frequency apparatus 202, and an antenna 203. In an uplink direction, the radio frequency apparatus 202 receives, via the antenna 203, information sent by a terminal device, and sends, to the baseband apparatus 201, the information sent by the terminal device for processing. In a downlink direction, the baseband apparatus 201 processes information of the terminal device and sends the information to the radio frequency apparatus 202, and the radio frequency apparatus 202 processes the information of the terminal device and then sends the information to the terminal device via the antenna 203.

The baseband apparatus 201 includes one or more processing units 2011, a storage unit 2012, and an interface 2013. The processing unit 2011 is configured to support the network device in performing functions of the network device in the foregoing method embodiments. The storage unit 2012 is configured to store a software program and/or data. The interface 2013 is configured to exchange information with the radio frequency apparatus 202. The interface includes an interface circuit, configured to input and output information. In an implementation, the processing unit is an integrated circuit, for example, one or more ASICs, one or more DSPs, one or more FPGAs, or a combination of these types of integrated circuits. These integrated circuits may be integrated together to form a chip. The storage unit 2012 and the processing unit 2011 may be located in a same chip, that is, an on-chip storage element. Alternatively, the storage unit 2012 and the processing unit 2011 may be on a different chip from the processing unit 2011, that is, an off-chip storage element. The storage unit 2012 may be one memory, or may be a collective name of a plurality of memories or storage elements.

The network device may implement some or all of the steps in the foregoing method embodiments in a form of scheduling programs by one or more processing units. For example, corresponding functions of the network device in FIG. 7 to FIG. 14 are implemented. The one or more processing units may support radio access technologies of a same standard, or may support radio access technologies of different standards.

A person of ordinary skill in the art may be aware that units and steps described with reference to embodiments disclosed in this specification can be implemented by electronic hardware, or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application. In addition, it should be understood that methods and steps in the examples described in embodiments disclosed in this specification may be implemented by using one or more functional units (or referred to as functional modules). The one or more functional units (or referred to as functional modules) may be located in a same apparatus or in different apparatuses.

In the several embodiments provided in this application, it should be understood that the disclosed system, apparatus, and method may be implemented in other manners. For example, the described apparatus embodiment is merely an example. For example, division into the units is merely logical function division. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory

(compact disc read-only memory, CD-ROM), a universal serial bus flash disk (universal serial bus flash disk), a removable hard disk, another optical disc storage, a magnetic disk storage medium, or another magnetic storage device, or any other medium that can be used to carry or store expected program code in a form of instructions or a data structure and that can be accessed by a computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applicable to a terminal device, and comprises:
obtaining first resource information, wherein the first resource information comprises at least one of frequency domain position information, a cyclic prefix, or a subcarrier spacing; and
receiving a multicast broadcast service in a radio access control RRC idle state or an RRC inactive state based on the first resource information.

2. The method according to claim 1, wherein
a first resource indicated by the first resource information completely or partially overlaps a frequency domain resource corresponding to a first control resource set; or
a first resource indicated by the first resource information is a predefined resource; or
a first resource indicated by the first resource information is a resource used when the terminal device receives the multicast broadcast service in an RRC connected state.

3. The method according to claim 2, wherein the method further comprises:
receiving an RRC connection release message from a network device, wherein the RRC connection release message does not carry the first resource information.

4. The method according to claim 1, wherein the obtaining first resource information comprises:
receiving first indication information from a network device, wherein the first indication information indicates the terminal device to receive the multicast broadcast service in the radio access control RRC idle state or the RRC inactive state based on the first resource information; and
determining the first resource information based on the first indication information.

5. The method according to claim 4, wherein
the first indication information carries the first resource information; or
the first resource information is resource information used when the terminal device receives the multicast broadcast service in an RRC connected state, and the first indication information indicates the terminal device to continue to use the resource information used when the terminal device receives the multicast broadcast service in the RRC connected state.

6. The method according to claim 4 or 5, wherein the first indication information is carried in a radio access control RRC message, a media access control control element MAC CE, a common channel, or downlink control information DCI, and the DCI is scrambled by using a radio network temporary identifier associated with the multicast broadcast service.

7. The method according to any one of claims 3 to 6, wherein the method further comprises:
sending second indication information to the network device, wherein the second indication information indicates that the terminal device has a capability to receive the multicast broadcast service in the RRC idle state or the RRC inactive state based on the first resource information, is used to request the network device to send the first resource information, indicates the first resource information requested by the terminal device, or indicates the terminal device to request RRC connection release.

8. A communication method, wherein the method is applicable to a network device, and comprises:
determining first resource information, wherein the first resource information comprises at least one of frequency domain position information, a cyclic prefix, or a subcarrier spacing; and
sending a multicast broadcast service based on the first resource information, wherein the first resource information is used to receive the multicast broadcast service when a terminal device is in a radio access control RRC idle state or an RRC inactive state.

9. The method according to claim 8, wherein
a first resource indicated by the first resource information completely or partially overlaps a frequency domain resource corresponding to a first control resource set; or
a first resource indicated by the first resource information is a predefined resource; or
a first resource indicated by the first resource information is a resource used when the terminal device receives the multicast broadcast service in an RRC connected state.

10. The method according to claim 9, wherein the method further comprises:
sending an RRC connection release message to the terminal device, wherein the RRC connection release message does not carry the first resource information.

11. The method according to claim 8, wherein the method further comprises:
sending first indication information to the terminal device, wherein the first indication information indicates the terminal device to receive the multicast broadcast service in the radio access control RRC idle state or the RRC inactive state based on the first resource information.

12. The method according to claim 11, wherein
the first indication information carries the first resource information; or
the first resource information is resource information used when the terminal device receives the multicast broadcast service in an RRC connected state, and the first indication information indicates the terminal device to continue to use the resource information used when the terminal device receives the multicast broadcast service in the RRC connected state.

13. The method according to claim 11 or 12, wherein the first indication information is carried in a radio access control RRC message, a media access control control element MAC CE, a common channel, or downlink control information DCI, and the DCI is scrambled by using a radio network temporary identifier associated with the multicast broadcast service.

14. The method according to any one of claims 10 to 13, wherein the method further comprises:
receiving second indication information from the terminal device, wherein the second indication information indicates that the terminal device has a capability to receive the multicast broadcast service in the RRC idle state or the RRC inactive state based on the first resource information, is used to request the first resource information, indicates the first resource information requested by the terminal device, or indicates the terminal device to request RRC connection release.

15. A communication apparatus, comprising:
a processing unit, configured to obtain first resource information, wherein the first resource information comprises at least one of frequency domain position information, a cyclic prefix, or a subcarrier spacing; and
a transceiver unit, configured to receive a multicast broadcast service in a radio access control RRC idle state or an RRC inactive state based on the first resource information.

16. The apparatus according to claim 15, wherein
a first resource indicated by the first resource information completely or partially overlaps a frequency domain resource corresponding to a first control resource set; or
a first resource indicated by the first resource information is a predefined resource; or
a first resource indicated by the first resource information is a resource used when the terminal device receives the multicast broadcast service in an RRC connected state.

17. The apparatus according to claim 16, wherein
the transceiver unit is further configured to receive an RRC connection release message from a network device, wherein the RRC connection release message does not carry the first resource information.

18. The apparatus according to claim 15, wherein
the transceiver unit is specifically configured to receive first indication information from a network device, wherein the first indication information indicates the terminal device to receive the multicast broadcast service in the radio access control RRC idle state or the RRC inactive state based on the first resource information; and
the processing unit is further configured to determine the first resource information based on the first indication information.

19. The apparatus according to claim 18, wherein
the first indication information carries the first resource information; or
the first resource information is resource information used when the terminal device receives the multicast broadcast service in an RRC connected state, and the first indication information indicates the terminal device to continue to use the resource information used when the terminal device receives the multicast broadcast service in the RRC connected state.

20. The apparatus according to claim 18 or 19, wherein the first indication information is carried in a radio access control RRC message, a media access control control element MAC CE, a common channel, or downlink control information DCI, and the DCI is scrambled by using a radio network temporary identifier associated with the multicast broadcast service.

21. The apparatus according to any one of claims 17 to 20, wherein
the transceiver unit is further configured to send second indication information to the network device, wherein the second indication information indicates that the terminal device has a capability to receive the multicast broadcast service in the RRC idle state or the RRC inactive state based on the first resource information, is used to request the network device to send the first resource information, indicates the first resource information requested by the terminal device, or indicates the terminal device to request RRC connection release.

22. A communication apparatus, comprising:
a processing unit, configured to determine first resource information, wherein the first resource information comprises at least one of frequency domain position information, a cyclic prefix, or a subcarrier spacing; and
a transceiver unit, configured to send a multicast broadcast service based on the first resource information, wherein the first resource information is used to receive the multicast broadcast service when a terminal device is in a radio access control RRC idle state or an RRC inactive state.

23. The apparatus according to claim 22, wherein
a first resource indicated by the first resource information completely or partially overlaps a frequency domain resource corresponding to a first control resource set; or
a first resource indicated by the first resource information is a predefined resource; or
a first resource indicated by the first resource information is a resource used when the terminal device receives the multicast broadcast service in an RRC connected state.

24. The apparatus according to claim 23, wherein
the transceiver unit is further configured to send an RRC connection release message to the terminal device, wherein the RRC connection release message does not carry the first resource information.

25. The apparatus according to claim 22, wherein
the transceiver unit is further configured to send first indication information to the terminal device, wherein the first indication information indicates the terminal device to receive the multicast broadcast service in the radio access control RRC idle state or the RRC inactive state based on the first resource information.

26. The apparatus according to claim 25, wherein
the first indication information carries the first resource information; or
the first resource information is resource information used when the terminal device receives the multicast broadcast service in an RRC connected state, and the first indication information indicates the terminal device to continue to use the resource information used when the terminal device receives the multicast broadcast service in the RRC connected state.

27. The apparatus according to claim 25 or 26, wherein the first indication information is carried in a radio access control RRC message, a media access control control element MAC CE, a common channel, or downlink control information DCI, and the DCI is scrambled by using a radio network temporary identifier associated with the multicast broadcast service.

28. The apparatus according to any one of claims 24 to 27, wherein
the transceiver unit is further configured to receive second indication information from the terminal device, wherein the second indication information indicates that the terminal device has a capability to receive the multicast broadcast service in the RRC idle state or the RRC inactive state based on the first resource information, is used to request the first resource information, indicates the first resource information requested by the terminal device, or indicates the terminal device to request RRC connection release.

29. A communications apparatus, comprising at least one processor and a memory, wherein the memory stores instructions, and when the instructions are run on a computer, the computer is enabled to perform the method according to any one of claims 1 to 7.

30. A communication apparatus, comprising at least one processor and a memory, wherein the memory stores instructions, and when the instructions are run on a computer, the computer is enabled to perform the method according to any one of claims 8 to 14.

31. A computer-readable storage medium, configured to store instructions, wherein when the instructions are run on a computer, the computer is enabled to perform the method according to any one of claims 1 to 7.

32. A computer-readable storage medium, configured to store instructions, wherein when the instructions are run on a computer, the computer is enabled to perform the method according to any one of claims 8 to 14.
